(19) Europäisches Patentamt
European Patent Office
Office européen des brevets

(11) EP 3 885 471 B1

(12) # EUROPÄISCHE PATENTSCHRIFT

(45) Veröffentlichungstag und Bekanntmachung des Hinweises auf die Patenterteilung:
**19.07.2023 Patentblatt 2023/29**

(21) Anmeldenummer: **20165250.0**

(22) Anmeldetag: **24.03.2020**

(51) Internationale Patentklassifikation (IPC):
***C25B 3/25*** *(2021.01)* ***C25B 9/19*** *(2021.01)*

(52) Gemeinsame Patentklassifikation (CPC):
**C25B 13/04; B01D 61/422; C25B 3/25; C25B 9/19**

(54) **VERBESSERTES VERFAHREN ZUR HERSTELLUNG VON NATRIUMALKOHOLATEN**

IMPROVED METHOD FOR THE PREPARATION OF SODIUM ALCOHOLATES

PROCÉDÉ AMÉLIORÉ DE FABRICATION D'ALCOOLS DE SODIUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.09.2021 Patentblatt 2021/39**

(73) Patentinhaber: **Evonik Operations GmbH**
**45128 Essen (DE)**

(72) Erfinder:
- **HORN, Michael**
  **53859 Niederkassel (DE)**
- **GÄRTNER, Felix**
  **45721 Haltem am See (DE)**
- **REINSBERG, Philip Heinrich**
  **53227 Bonn (DE)**
- **TEUFERT, Rüdiger**
  **51143 Köln (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**WO-A1-2008/076327**
**WO-A2-2009/073062**
**DE-A1- 4 233 191**
**US-A- 5 389 211**
**US-A- 5 425 856**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur elektrochemischen Herstellung von Natriumalkoholat. Das Verfahren wird in einer Elektrolysezelle durchgeführt, welche drei Kammern aufweist, wobei die mittlere Kammer durch einen für Natriumionen durchlässigen Festelektrolyten, beispielsweise NaSICON, von der Kathodenkammer und durch eine Diffusionsbarriere, beispielsweise einer für Kationen oder Anionen selektiven Membran, von der Anodenkammer abgetrennt ist. Durch die Geometrie der Elektrolysezelle wird der für Natriumionen durchlässige Festelektrolyt vor säurebedingter Zerstörung durch den bei der Elektrolyse fallenden pH-Wert des Anolyten geschützt. Im Verfahren wird als Anolyt eine Sole eingesetzt, welche neben NaCl auch Carbonate und/oder Hydrogencarbonate umfasst. Solche Solen entstehen typischerweise bei der Vorbehandlung von Rohsolen, die beispielsweise aus Meersalz gewonnen werden. Bei dieser Vorbehandlung werden von Natrium verschiedene Metallionen, wie zum Beispiel $Sr^2$, $Ba^{2+}$, $Ca^{2+}$, $Mg^{2+}$, mittels Carbonatfällung aus der Rohsole entfernt und so eine Sole umfassend NaCl und Carbonat und/oder Hydrogencarbonat erhalten. Das erfindungsgemäße Verfahren löst das Problem, dass sich während der Elektrolyse dieser aus der Vorbehandlung erhaltenen Sole $CO_2$ aus diesen Carbonaten und/oder Hydrogencarbonaten in der Elektrolysezelle bildet. Es verhindert die Ausbildung eines die Elektrolyse störenden Gaskissens in der Elektrolysezelle und verringert die Kontaminierung des Chlors, welches insbesondere im erfindungsgemäßen Verfahren erhalten wird, mit $CO_2$.

**1. Hintergrund der Erfindung**

Die elektrochemische Herstellung von Alkalimetallalkoholatlösungen ist ein wichtiger industrieller Prozess, der beispielsweise in der DE 103 60 758 A1, der US 2006/0226022 A1 und der WO 2005/059205 A1 beschrieben ist. Das Prinzip dieser Verfahren ist eine Elektrolysezelle, in deren Anodenkammer sich die Lösung eines Alkalisalzes, beispielsweise Kochsalz oder NaOH, und in deren Kathodenkammer sich der betreffende Alkohol oder eine niedrig konzentrierte alkoholische Lösung des betreffenden Alkalialkoholates, beispielsweise Natriummethanolat oder Natriumethanolat, befinden. Die Kathodenkammer und die Anodenkammer sind durch eine das eingesetzte Alkalimetallion leitende Keramik getrennt, beispielsweise NaSICON oder dessen Analoga für Kalium oder Lithium. Bei Anlegen eines Stroms entstehen an der Anode - wenn ein Chloridsalz des Alkalimetalls eingesetzt wird - Chlor und an der Kathode Wasserstoff und Alkoholationen. Der Ladungsausgleich resultiert dadurch, dass Alkalimetallionen aus der Mittelkammer in die Kathodenkammer über die für sie selektive Keramik wandern. Der Ladungsausgleich zwischen Mittelkammer und Anodenkammer resultiert aus der Wanderung von Kationen bei Einsatz von Kationenaustauschermembranen oder der Wanderung von Anionen bei Einsatz von Anionenaustauschermembranen oder durch Wanderung beider Ionenarten bei Einsatz nichtspezifischer Diffusionsbarrieren. Dadurch erhöht sich die Konzentration des Alkalialkoholats in der Kathodenkammer, und es erniedrigt sich die Konzentration der Natriumionen im Anolyten.

NaSICON-Festelektrolyte werden auch bei der elektrochemischen Herstellung anderer Verbindungen eingesetzt:

WO 2014/008410 A1 beschreibt ein elektrolytisches Verfahren zur Herstellung von elementarem Titan oder Seltenen Erden. Dieses Verfahren beruht darauf, dass Titanchlorid aus $TiO_2$ und der entsprechenden Säure gebildet wird, dieses mit Natriumalkoholat zum Titaniumalkoholat und NaCl reagiert und schließlich elektrolytisch zu elementarem Titan und Natriumalkoholat umgesetzt wird.

WO 2007/082092 A2 und WO 2009/059315 A1 beschreiben Verfahren zur Herstellung von Biodiesel, in denen mithilfe von über NaSICON elektrolytisch hergestellten Alkoholaten zunächst Triglyceride in die entsprechenden Alkalimetalltriglyceride überführt werden und in einem zweiten Schritt mit elektrolytisch erzeugten Protonen zu Glycerin und dem jeweiligen Alkalimetallhydroxid umgesetzt werden.

Im Stand der Technik sind demnach Verfahren beschrieben, die in Elektrolysezellen mit einer ionendurchlässigen Schicht durchgeführt werden, wie zum Beispiel NaSiCON-Festelektrolyten. Diese Festelektrolyten weisen allerdings typischerweise den Nachteil auf, dass sie nicht gegenüber wässrigen Säuren langzeitstabil sind. Dies ist insofern problematisch, als während der Elektrolyse in der Anodenkammer der pH durch Oxidationsprozesse sinkt (zum Beispiel bei Herstellung von Halogenen durch Disproportionierung oder durch Sauerstoffbildung). Diese sauren Bedingungen greifen den NaSICON-Festelektrolyten an, so dass das Verfahren nicht großtechnisch eingesetzt werden kann. Um diesem Problem zu begegnen, wurden im Stand der Technik verschiedene Ansätze beschrieben.

So wurden im Stand der Technik Dreikammerzellen vorgeschlagen. Solche sind auf dem Gebiet der Elektrodialyse bekannt, zum Beispiel US 6,221,225 B1.

WO 2012/048032 A2 und US 2010/0044242 A1 beschreiben beispielsweise elektrochemische Verfahren zur Herstellung von Natriumhypochlorit und ähnlicher Chlorverbindungen in einer solchen Dreikammerzelle. Die Kathodenkammer und die mittlere Kammer der Zelle werden dabei durch einen für Kationen durchlässigen Festelektrolyten wie

zum Beispiel NaSICON getrennt. Um diesen vor dem sauren Anolyten zu schützen, wird der Mittelkammer beispielsweise Lösung aus der Kathodenkammer zugeführt. Die US 2010/0044242 A1 beschreibt außerdem in Abbildung 6, dass Lösung aus der mittleren Kammer mit Lösung aus der Anodenkammer außerhalb der Kammer vermischt werden kann, um Natriumhypochlorit zu erhalten.

Auch für die Herstellung oder Reinigung von Alkalialkoholaten wurden solche Zellen im Stand der Technik vorgeschlagen. So beschreibt die US 5,389,211 A ein Verfahren zur Reinigung von Alkoholatlösungen, in denen eine Dreikammerzelle eingesetzt wird, in welcher die Kammern durch kationenselektive Festelektrolyten oder auch nichtionische Trennwände voneinander abgegrenzt sind. Die Mittelkammer wird als Pufferkammer eingesetzt, um zu verhindern, dass sich die gereinigte Alkoxid- oder Hydroxidlösung aus der Kathodenkammer mit der verunreinigten Lösung aus der Anodenkammer mischt.

Die WO 2008/076327 A1 beschreibt ein Verfahren zur Herstellung von Alkalimetallalkoholaten. Dabei wird eine Dreikammerzelle eingesetzt, deren Mittelkammer mit Akalimetallalkoholat gefüllt ist (siehe zum Beispiel Absätze [0008] und [0067] der WO 2008/076327 A1). Dadurch wird der die Mittelkammer und die Kathodenkammer abtrennende Festelektrolyt vor der in der Anodenkammer befindlichen Lösung, die bei der Elektrolyse saurer wird, geschützt. Diese Anordnung hat allerdings den Nachteil, dass es sich bei Alkalimetallalkoholatlösung um das gewünschte Produkt handelt, dieses aber als Pufferlösung verbraucht und kontinuierlich kontaminiert wird. Ein weiterer Nachteil des in der WO 2008/076327 A1 beschriebenen Verfahrens ist, dass die Bildung des Alkoholats in der Kathodenkammer von der Diffusionsgeschwindigkeit der Alkalimetallionen durch zwei Membranen bzw. Festelektrolyten abhängt. Dies führt wiederum zu einer Verlangsamung der Bildung des Alkoholats.

Die WO 2009/073062 A2 beschreibt ein ähnliches Verfahren zur Herstellung von Alkalimetallalkoholaten in einer Dreikammerelektrolysezelle. Diese umfasst eine Mittelkammer, in welcher ebenfalls Alkalimetallalkoholatlösung als Pufferlösung eingesetzt wird.

Die vorliegende Erfindung adressiert ein weiteres Problem. So ist es bei der technischen Elektrolyse von NaCl erforderlich, das Salz, bevor es der Elektrolyse unterworfen wird, von Nebenbestandteilen zu reinigen, die es aufgrund seines Ursprungs als abgelagertes Meeressalz enthält. Dazu gehören unter anderem die Entfernung nicht löslicher Bestandteile und die Fällung und Entfernung von Ionen wie Sulfat, $Sr^2$, $Ba^{2+}$, $Ca^{2+}$ und $Mg^{2+}$. Obwohl diese Verunreinigungen keinen direkten Einfluss auf den Elektrolyseprozess in der Dreikammerzelle haben, führt Ihre Nichtbeseitigung zu einem Anstieg ihrer Konzentration in der Salzlösung. Der Grund für diesen Anstieg liegt in der für Elektrolysen üblichen Konstruktion sowie der Zuführung von Salz in die Elektrolysezelle. Üblicherweise erfolgt während der Elektrolyse die elektrochemische Umsetzung nur eines Teils des in Wasser gelösten Salzes. Bevor die Konzentration des Salzes auf einen Wert absinkt, der zu einer deutlichen Leitfähigkeitsverringerung führen würde, wird die Lösung kontinuierlich erneuert. Dabei enthält die Restlösung in der Regel immer noch mehr als ⅔ der ursprünglichen Konzentration an Salz. Um den Elektrolyseprozess ökonomisch sinnvoll zu gestalten und zu verhindern, dass große Abfallmengen an Salz entstehen, wird die Sole nach Durchlauf der Elektrolyse mit frischem Salz versetzt, so dass der Gehalt in der danach erhaltenen Rohsole wieder der Konzentration entspricht, die die Sole anfänglich beim Start der Elektrolyse in der Zelle aufwies.

Diese Vorgehensweise ähnelt einem geschlossenem Flüssigkeitskreislauf, der stetig mit Salz nachbeliefert wird. Die Menge an nachgeliefertem Salz entspricht dabei stöchiometrisch der Menge des Alkoholats, welches bei der Elektrolyse entsteht.

Bestandteile, die im Salz enthalten sind, aber nicht in der Elektrolyse umgesetzt werden, konzentrieren sich bei dieser Technologie mit der Zeit auf. Dadurch wird zwar nicht unmittelbar, aber nach gewisser Zeit die Umsetzung in der Elektrolysezelle beeinträchtigt. Beispielsweise können Nebeneffekte, wie die Abscheidung von Calciumsulfat an Rohrleitungen, die bei Konzentrationen im Bereich 10 ppm in Sole beginnen, zu Problemen in der Solezuführung, zu Ablagerungen an der Festelektrolyt-Oberfläche oder zur Blockierung der ionendurchlässigen Diffusionsbarriere führen und den Elektrolyseprozess gänzlich stoppen oder zumindest energetisch ungünstig beeinflussen. Daneben kann es dadurch auch zu Reaktionen an der Anode führen, die diese zerstören.

Gerade wenn, was vorteilhaft ist, das in der Elektrolyse eingesetzte Salz aus Meersalz stammt, ist es daher unverzichtbar, Nebenbestandteile aus der Rohsole so zu entfernen, bevor dieses der Elektrolysezelle zugeführt wird, damit es nicht zur Anreicherung unerwünschter Salze kommt und insbesondere bestimmte für die Nebenbestandteile spezifischen Grenzwerte nicht überschritten werden.

Wie allgemein aus dem Betrieb von Chloralkalielektrolysen bekannt, erfolgt diese Abreicherung hauptsächlich über Fällungsreaktionen durch Zugabe von carbonathaltigen Fällchemikalien bzw. Einstellung bestimmter alkalischer pH-Werte, bei denen es zu einer Carbonat- und Hydroxidfällung zum Beispiel gemäß der entsprechenden Reaktionsgleichungen (1) bis (3) kommt:

$$FeCl_3 + 3\ NaOH \rightarrow Fe(OH)_3 + 3\ NaCl \qquad (1)$$

$$CaCl_2 + Na_2CO_3 \rightarrow CaCOs + 2\ NaCl \qquad (2)$$

$$MgCl_2 + 2\ NaOH \rightarrow Mg(OH)_2 + 2\ NaCl \qquad (3)$$

Die Zugabe von NaOH wird über Einstellung eines bestimmten pH-Wertes im Bereich 10 bis 11 in der Sole realisiert. Die Zugabe von Carbonat erfolgt in der Regel mit einem deutlichen Überschuss an Natriumcarbonat (Soda). Die gefällten Carbonate und Hydroxide werden danach über eine Filtration aus der Sole entfernt. Nach Durchführung dieses Reinigungsschrittes erhält man eine Sole mit alkalischem pH-Wert und einem nachweisbaren Gehalt an Carbonaten bzw. Hydrogencarbonaten.

Das Vorliegen von Carbonaten und Hydrogencarbonaten in der Sole in der Elektrolysezelle führt aber zu einem weiteren Problem. Während der Elektrolyse in der Dreikammerzelle wird der pH-Wert der Sole in der Mittelkammer und in der Anolytkammer verändert. Der pH-Wert sinkt, die Sole wird saurer. Dieser Effekt ist darauf zurückzuführen, dass an der Anode entstehendes Chlor in der Salzlösung unmittelbar gemäß Reaktionsgleichung (4) disproportioniert:

$$Cl_2 + H_2O \text{ ---> } HOCl + HCl \qquad (4).$$

Dabei entstehen Salzsäure und hypochlorige Säure. Dies führt wiederum zu einer pH-Erniedrigung der Anolytsole bis zu einem pH-Wert von 3 und niedriger in der Anolytkammer. Dadurch sinkt auch der pH-Wert der Mittelkammer ab. Das ist erst recht dann der Fall, wenn bei einer Dreikammerzelle die Mittelkammer und Anolytkammer lediglich über die ionendurchlässige Diffusionsbarriere getrennt sind, über welche Protonen aus der Anolytkammer in die Mittelkammer transportiert werden.

Durch die Verringerung des pH-Wertes werden die im Anolyten enthaltenen Carbonate und Hydrogencarbonate als COz freigesetzt. In der Anolytkammer werden diese mit dem entstehenden Chlor aus der Kammer heraustransportiert. In nachgelagerten technischen Schritten kann das COz aus dem Chlor entfernt werden. Diese Schritte sind zwar allgemein bekannt und technisch bewährt. Beispielsweise stehen dazu Chlorwäsche oder Chlorverflüssigung zur Verfügung. In vielen Anwendungen stört ein geringer Anteil COz auch nicht den weiteren Einsatz von Chlor. Dennoch stellt die Verunreinigung von $Cl_2$ mit COz zum Beispiel bei der Aufbereitung von Trinkwasser mit Chlor (F. Küke, Vom Wasser 2005, 103, 18-22) ein grundsätzliches Problem dar und ist deshalb unerwünscht. Daneben können $CO_2$-Verunreinigungen im Chlor zu unerwünschten Reaktionen wie zum Beispiel einer Umsetzung zu Säurechloriden führen.

Bei Dreikammerzellen wird die COz-Freisetzung aufgrund der pH-Reduzierung auch in der Mittelkammer festgestellt und führt dort ebenfalls zu Problemen. Zwar reduziert sich hier der pH-Wert bei der Elektrolyse typischerweise nur auf pH-Werte von 8 bis 9, also nicht ganz so stark wie in der Anodenkammer. Dies genügt jedoch, um die Ausgasung von COz zu veranlassen.

Dadurch dass die Sole der Elektrolysezelle über die Mittelkammer zugeführt wird und von dort direkt in die Anodenkammer überführt wird, sammelt sich COz auch in der Mittelkammer an. Während COz in der Anodenkammer mit dem Anolyten aus der Elektrolysezelle abgeführt werden kann, kann es aus der Mittelkammer nicht entweichen. Das führt nach gewisser Zeit dazu, dass die Mittelkammer zu erheblichem Anteil mit Gas gefüllt ist. Dadurch wird die für die elektrochemische Umsetzung zur Verfügung stehende, mit Sole bedeckte Oberfläche des Festelektrolyten reduziert, wodurch der Widerstand der Gesamtelektrolyse ansteigt. Das wiederum führt zu einer Verringerung des Umsatzes proportional zu einer Reduzierung der Stromstärke zwischen Anode und Kathode bei gleichbleibender Spannung oder zu höheren Energiekosten, wenn die dadurch reduzierte Strommenge durch eine Erhöhung der Spannung zwischen Anode und Kathode kompensiert werden soll.

Die Aufgabe der vorliegenden Erfindung war deshalb, ein verbessertes Verfahren zur elektrolytischen Herstellung von Natriumalkoholat und insbesondere Chlor bereitzustellen, welches einen Schutz des kationenleitenden Festelektrolyten vor Säure gewährleistet und die vorgenannten Nachteile nicht aufweist. Insbesondere soll sich das Verfahren durch einen gegenüber dem Stand der Technik sparsameren Einsatz der Edukte auszeichnen. Daneben soll das Verfahren die Verwendung von NaCl-Lösung, welche auch Carbonate und Hydrogencarbonate aufweist, ermöglichen, wobei die Verunreinigung des Chlors mit COz und die Ansammlung von COz in der Elektrolysezelle vermindert sein sollen.

Es wurde nun überraschend ein Verfahren gefunden, welches die erfindungsgemäße Aufgabe löst.

## 2. Kurzbeschreibung der Erfindung

Das erfindungsgemäße Verfahren ist eines zur Herstellung einer Lösung $\mathbf{L_1}$ <115> eines Natriumalkoholats NaOR im Alkohol ROH, insbesondere von Chlor ($Cl_2$) und einer Lösung $\mathbf{L_1}$ <115>, in einer Elektrolysezelle **E** <100>,

wobei **E** <100> mindestens eine Anodenkammer $\mathbf{K_A}$ <101 >, mindestens eine Kathodenkammer $\mathbf{K_K}$ <102> und mindestens eine dazwischen liegende Mittelkammer $\mathbf{K_M}$ <103> umfasst,
wobei $\mathbf{K_A}$ <101 > eine anodische Elektrode $\mathbf{E_A}$ <104> und einen Ablauf $\mathbf{A_{KA}}$ <106> umfasst,

wobei **$K_K$** <102> eine kathodische Elektrode **$E_K$** <105>, einen Zulauf **$Z_{KK}$** <107> und einen Ablauf **$A_{KK}$** <109> umfasst, wobei **$K_M$** <103> einen Zulauf **$Z_{KM}$** <108> und einen Gasauslass **G** <120> umfasst, durch eine Diffusionsbarriere **D** <110> von **$K_A$** <101 > abgetrennt ist und durch einen natriumkationenleitenden Festelektrolyten **$F_K$** <111> von **$K_K$** <102> abgetrennt ist,
wobei **$K_A$** <101 > und **$K_M$** <103> durch eine Verbindung **$V_{AM}$** <112> miteinander verbunden sind, durch welche Flüssigkeit aus **$K_M$** <103> in **$K_A$** <101 > geleitet werden kann,
wobei das Verfahren die folgenden, gleichzeitig ablaufenden Schritte (a), (b) und (c) umfasst:

(a) ein Lösung **$L_2$** <113> umfassend den Alkohol ROH und bevorzugt umfassend mindestens ein Natriumalkoholat NaOR wird durch **$K_K$** <102> geleitet,

(b) eine neutrale oder alkalische, wässrige Lösung **$L_3$** <114> umfassend NaCl und mindestens ein Salz S ausgewählt aus Hydrogencarbonat, Carbonat wird durch **$K_M$** <103>, dann über **$V_{AM}$** <112>, dann durch **$K_A$** <101 > geleitet,

(c) zwischen **$E_A$** <104> und **$E_K$** <105> wird Spannung angelegt,

wodurch am Ablauf **$A_{KK}$** <109> die Lösung **$L_1$** <115> erhalten wird, wobei die Konzentration von NaOR in **$L_1$** <115> höher ist als in **$L_2$** <113>,
und wodurch am Ablauf **$A_{KA}$** <106> eine wässrige Lösung **$L_4$** <116> von NaCl und insbesondere $Cl_2$ erhalten wird, wobei die Konzentration von NaCl in **$L_4$** <116> geringer ist als in **$L_3$** <114>, und wobei die Gesamtkonzentration aller Salze **S** in **$L_4$** <116> geringer ist als in **$L_3$** <114>,
und wodurch in der Mittelkammer **$K_M$** <103> COz <121 > entsteht, welches über den Gasauslass **G** <120> aus der Mittelkammer **$K_M$** <103> abgeführt wird,
wobei Rein Alkylrest mit 1 bis 4 Kohlenstoffatomen ist.

### 3. Abbildungen

Abbildung 1 zeigt das erfindungsgemäße Verfahren anhand einer Dreikammerzelle E <100> umfassend eine Kathodenkammer **$K_K$** <102>, eine Anodenkammer **$K_A$** <101 > und eine dazwischen liegende Mittelkammer **$K_M$** <103>. Die drei Kammern werden von einer Außenwand <117> der Dreikammerzelle **E** <100> begrenzt. Die Kathodenkammer **$K_K$** <102> ist außerdem durch einen für Natriumionen selektiv permeablen NaSICON-Festelektrolyten **$F_K$** <111 > von der Mittelkammer **$K_M$** <103> abgetrennt. Die Mittelkammer **$K_M$** <103> ist zusätzlich wiederum durch eine Diffusionsbarriere **D** <110> von der Anodenkammer **$K_A$** <101 > abgetrennt. Der NaSICON-Festelektrolyt **$F_K$** <111> und die Diffusionsbarriere **D** <110> erstrecken sich über die gesamte Tiefe und Höhe der Dreikammerzelle **E** <100>.

Durch die Kathodenkammer **$K_K$** <102> wird eine Lösung von Natriummethanolat in Methanol **$L_2$** <113> geleitet. Eine wässrige Lösung von Natriumchlorid **$L_3$** <114> mit pH 10.5, welche Natriumcarbonat umfasst, wird über den Zulauf **$Z_{KM}$** <108> gleichgerichtet mit der Schwerkraft in die Mittelkammer **$K_M$** <103> gegeben. Durch die Verbindung **$V_{AM}$** <112>, die zwischen einem Ablauf **$A_{KM}$** <118> der Mittelkammer **$K_M$** <103> und einem Zulauf **$Z_{KA}$** <119> der Anodenkammer **$K_A$** <101 > ausgebildet ist, ist die Mittelkammer **$K_M$** <103> mit der Anodenkammer **$K_A$** <101> verbunden. Natriumchlorid- und Natriumcarbonatlösung **$L_3$** <114> wird durch diese Verbindung **$V_{AM}$** <112> von der Mittelkammer **$K_M$** <103> in die Anodenkammer **$K_A$** <101 > geleitet. Beim Anlegen einer Spannung wird in der Kathodenkammer **$K_K$** <102> Methanol zu Methanolat und $H_2$ reduziert. Natriumionen diffundieren dabei von der Mittelkammer **$K_M$** <103> durch den NaSICON-Festelektrolyten **$F_K$** <111 > in die Kathodenkammer **$K_K$** <102>. Insgesamt erhöht sich dadurch die Konzentration von Natriummethanolat in der Kathodenkammer **$K_K$** <102>, wodurch eine methanolische Lösung von Natriummethanolat **$L_1$** <115> erhalten wird, deren Konzentration von Natriummethanolat gegenüber **$L_2$** <113> erhöht ist. In der Anodenkammer **$K_A$** <101> werden Chloridionen aus **$L_3$** <114> zu Clz oxidiert.

$Cl_2$ reagiert in wässriger Lösung sauer. Aufgrund der Geometrie der Dreikammerzelle E <100> und der Führung der wässrigen Lösung **$L_3$** <114> wird der säureempfindliche NaSICON-Festelektrolyt <111 > vor der gegenüber **$L_3$** <114> erhöhten Acidität der in der Anodenkammer **$K_A$** <101> resultierenden Lösung **$L_4$** <116> geschützt. Gleichzeitig entsteht in der Mittelkammer **$K_M$** <103> gasförmiges COz <121 >, ein Vorgang, der sich mit fortschreitender Elektrolyse verstärkt. Dieses COz <121 > kann über den Gasauslass <120>, der an der Mittelkammer **$K_M$** <103> angebracht ist, entweichen. So wird ein Gaspolsters aus COz <121 > in der Mittelkammer **$K_M$** <103> vermieden.

Abbildung 2 zeigt eine Ausführungsform des erfindungsgemäßen Verfahrens, die der in Abbildung 1 dargestellten entspricht. Der einzige Unterschied ist dabei, dass die Verbindung **$V_{AM}$** <112> von der Mittelkammer **$K_M$** <103> in die Anodenkammer **$K_A$** <101 > durch eine Perforation in der Diffusionsbarriere **D** <110> gebildet wird.

Abbildung 3 zeigt ein Diagramm des Spannungsverlauf der Elektrolyse in einer Dreikammerzelle mit und ohne Entlüftung der Mittelkammer. Die Messpunkte des in der Dreikammerzelle ohne Belüftung durchgeführten Beispiels sind

mit dem Symbol (+), jene des in der Dreikammerzelle mit Belüftung durchgeführten mit dem Symbol (■). Die x-Achse gibt die Zeit in Stunden wieder, während die y-Achse die prozentuale Veränderung der anfänglich gemessenen Spannung in Volt wiedergibt. Der Vergleich zeigt, dass mit der erfindungsgemäßen Zelle ein konstanter Spannungsverlauf erhalten wird, während bei Dreikammerzelle ohne Belüftung aufgrund der Ausbildung eines COz-Gaskissens die Spannung schnell ansteigt.

## 4. Detaillierte Beschreibung der Erfindung

### 4.1 Elektrolysezelle **E**

Das erfindungsgemäße Verfahren wird in einer Elektrolysezelle **E,** die mindestens eine Anodenkammer $\mathbf{K_A}$, mindestens eine Kathodenkammer $\mathbf{K_K}$ und mindestens eine dazwischen liegende Mittelkammer $\mathbf{K_M}$ umfasst, durchgeführt. Dies umfasst auch Elektrolysezellen **E,** welche mehr als eine Anodenkammer $\mathbf{K_A}$ und/oder Kathodenkammer $\mathbf{K_K}$ und/oder Mittelkammer $\mathbf{K_M}$ aufweisen. Solche Elektrolysezellen, in denen diese Kammern modulartig aneinandergefügt werden, sind beispielsweise in der DD 258 143 A3, US 2006/0226022 A1 beschrieben.

Die Anodenkammer $\mathbf{K_A}$ umfasst eine anodische Elektrode $\mathbf{E_A}$. Als solche anodische Elektrode $\mathbf{E_A}$ kommt jede dem Fachmann geläufige Elektrode in Frage, die unter den Bedingungen des erfindungsgemäßen Verfahrens stabil ist. Solche sind insbesondere in WO 2014/008410 A1, Absatz [024] oder DE 10360758 A1, Absatz [031] beschrieben. Diese Elektrode $\mathbf{E_A}$ kann aus einer Schicht bestehen oder aus mehreren planen, zueinander parallelen Schichten bestehen, die jeweils perforiert oder expandiert sein können. Die anodische Elektrode $\mathbf{E_A}$ umfasst insbesondere ein Material, welches ausgewählt ist aus der Gruppe bestehend aus Rutheniumoxid, Iridiumoxid, Nickel, Kobalt, Nickelwolframat, Nickeltitanat, Edelmetalle wie insbesondere Platin, welches auf einem Träger wie Titan oder Kovar ® (einer Eisen/Nickel/Kobalt-Legierung, in denen die einzelnen Anteile bevorzugt wie folgt sind: 54 Massen-% Eisen, 29 Massen-% Nickel, 17 Massen-% Cobalt) geträgert ist. Weitere mögliche Anodenmaterialien sind insbesondere Edelstahl, Blei, Graphit, Wolframcarbid, Titandiborid. Bevorzugt umfasst $\mathbf{E_A}$ eine mit Rutheniumoxid/Iridiumoxid beschichtete Titananode ($RuO_2$ + $IrO_2$ / Ti).

Die Kathodenkammer $\mathbf{K_K}$ umfasst eine kathodische Elektrode $\mathbf{E_K}$. Als solche kathodische Elektrode $\mathbf{E_K}$ kommt jede dem Fachmann geläufige Elektrode in Frage, die unter den Bedingungen stabil ist. Solche sind insbesondere in WO 2014/008410 A1, Absatz [025] oder DE 10360758 A1, Absatz [030] beschrieben. Diese Elektrode $\mathbf{E_K}$ kann aus der Gruppe bestehend aus Maschenwolle, dreidimensionale Matrixstruktur oder als "Kugeln" ausgewählt sein. Die kathodische Elektrode $\mathbf{E_K}$ umfasst insbesondere ein Material, welches ausgewählt ist aus der Gruppe bestehend aus Stahl, Nickel, Kupfer, Platin, platinierte Metalle, Palladium, auf Kohle geträgertes Palladium, Titan. Bevorzugt umfasst $\mathbf{E_K}$ Nickel.

Die mindestens eine Mittelkammer $\mathbf{K_M}$ befindet sich zwischen der Anodenkammer $\mathbf{K_A}$ und der Kathodenkammer $\mathbf{K_K}$.

Die Elektrolysezelle E weist üblicherweise eine Außenwand $\mathbf{W_A}$ auf. Die Außenwand $\mathbf{W_A}$ ist insbesondere aus einem Material, welches aus der Gruppe bestehend aus Stahl, bevorzugt gummierter Stahl, Kunststoff, der insbesondere aus Telene ® (duroplastisches Polydicyclopentadien), PVC (Polyvinylchlorid), PVC-C (nachchloriertes Polyvinylchlorid), PVDF (Polyvinylidenfluorid) ausgewählt ist. $\mathbf{W_A}$ kann insbesondere für Zuläufe und Abläufe sowie für den Gasauslass <120> durchbrochen sein. Innerhalb von $\mathbf{W_A}$ liegen dann die mindestens eine Anodenkammer $\mathbf{K_A}$, die mindestens eine Kathodenkammer $\mathbf{K_K}$ und die mindestens eine dazwischen liegende Mittelkammer $\mathbf{K_M}$.

$\mathbf{K_M}$ ist durch eine Diffusionsbarriere D von $\mathbf{K_A}$ abgetrennt und durch einen natriumkationenleitenden Festelektrolyten $\mathbf{F_K}$ von $\mathbf{K_K}$ abgetrennt.

Als Diffusionsbarriere **D** kann jedes Material genutzt werden, welches unter den Bedingungen des erfindungsgemäßen Verfahrens stabil ist und den Übergang von Protonen von der in der Anodenkammer $\mathbf{K_A}$ befindliche Flüssigkeit in die Mittelkammer $\mathbf{K_M}$ verhindert oder verlangsamt.

Als Diffusionsbarriere **D** wird insbesondere eine nicht ionenspezifische Trennwand oder eine für spezifische Ionen durchlässige Membran verwendet. Bevorzugt handelt es sich bei der Diffusionsbarriere **D** um eine für spezifische Ionen durchlässige Membran.

Das Material für die nichtionische Trennwand ist insbesondere aus der Gruppe bestehend aus Gewebe, wobei es sich insbesondere um textiles Gewebe oder Metallgewebe handelt, Glas, wobei es sich insbesondere um gesintertes Glas oder Glasfritten handelt, Keramik, insbesondere keramische Fritten, Membrandiaphragmas ausgewählt.

Handelt es sich bei der Diffusionsbarriere **D** um eine "für spezifische Ionen durchlässige Membran", so bedeutet dies erfindungsgemäß, dass die jeweilige Membran die Diffusion bestimmter Ionen durch sie hindurch gegenüber anderen begünstigt. Insbesondere sind damit Membranen gemeint, die die Diffusion durch sie hindurch von Ionen einer bestimmten Ladungsart gegenüber entgegengesetzt geladenen Ionen begünstigt. Noch bevorzugter begünstigen für spezifische Ionen durchlässige Membranen außerdem die Diffusion bestimmter Ionen mit einer Ladungsart gegenüber anderen Ionen derselben Ladungsart durch sie hindurch.

Bevorzugt handelt es sich demnach bei der Diffusionsbarriere **D** um eine anionenleitende Membran oder um

eine kationenleitende Membran. Bevorzugter handelt es sich bei der Diffusionsbarriere **D** um eine kationenleitende Membran.

Anionenleitende Membranen sind erfindungsgemäß solche, die selektiv Anionen, bevorzugt selektiv bestimmte Anionen leiten. In anderen Worten begünstigen sie die Diffusion von Anionen durch sie hindurch gegenüber der von Kationen, insbesondere gegenüber Protonen, noch bevorzugter begünstigen sie zusätzlich die Diffusion von bestimmten Anionen durch sie hindurch gegenüber der Diffusion anderer Anionen durch sie hindurch.

Kationenleitende Membranen sind erfindungsgemäß solche, die selektiv Kationen, bevorzugt selektiv bestimmte Kationen leiten. In anderen Worten begünstigen sie die Diffusion von Kationen durch sie hindurch gegenüber der von Anionen, noch bevorzugter begünstigen sie die Diffusion von bestimmten Kationen, durch sie hindurch gegenüber der Diffusion anderer Kationen durch sie hindurch, noch viel mehr bevorzugter von Kationen, bei denen es sich nicht um Protonen handelt, noch bevorzugter um Natriumkationen handelt, gegenüber Protonen.

"Begünstigen die Diffusion bestimmter Ionen X gegenüber der Diffusion anderer Ionen Y" bedeutet insbesondere, dass der Diffusionskoeffizient (Einheit $m^2/s$) der Ionenart X bei einer gegebenen Temperatur für die betreffende Membran um den Faktor 10, bevorzugt 100, bevorzugt 1000 höher ist als der Diffusionskoeffizient der Ionenart Y für die betreffende Membran.

Als anionenleitende Membran wird insbesondere eine solche eingesetzt, die für Chlorid selektiv sind. Solche Membranen sind dem Fachmann bekannt und können von ihm eingesetzt werden.

Salz **S** ist mindestens eines ausgewählt aus Hydrogencarbonat, Carbonat, noch bevorzugter mindestens eines ausgewählt aus Natriumcarbonat, Natriumhydrogencarbonat.

Bevorzugt wird als anionenleitende Membran eine für Chlorid selektive Membran eingesetzt.

Anionenleitende Membranen sind beispielsweise beschrieben von M.A. Hickner, A.M. Herring, E.B. Coughlin, Journal of Polymer Science, Part B: Polymer Physics 2013, 51, 1727-1735 und C.G. Arges, V. Ramani, P.N. Pintauro, Electrochemical Society Interface 2010, 19, 31-35, WO 2007/048712 A2 sowie auf Seite 181 des Lehrbuchs von Volkmar M. Schmidt Elektrochemische Verfahrenstechnik: Grundlagen, Reaktionstechnik, Prozessoptimierung, 1. Auflage (8. Oktober 2003).

Noch bevorzugter werden demnach als anionenleitende Membran organische Polymere, welche insbesondere aus Polyethylen, Polybenzimidazolen, Polyetherketonen, Polystyrol, Polypropylen oder fluorierten Membranen wie Polyperfluorethylen, bevorzugt Polystyrol, ausgewählt sind, eingesetzt, wobei diese kovalent gebunden funktionelle Gruppen ausgewählt aus $-NH_3^+$, $-NRH_2^+$, $-NR_3^+$, $=NR^+$;$-PR_3^+$, wobei es sich bei R um Alkylgruppen mit bevorzugt 1 bis 20 Kohlenstoffatomen handelt, oder andere kationische Gruppen aufweisen. Bevorzugt weisen sie kovalent gebundene funktionelle Gruppen, ausgewählt aus $-NH_3^+$, $-NRH_2^+$, $-NR_3^+$, bevorzugter ausgewählt aus $-NH_3^+$, $-NR_3^+$, noch bevorzugter-$NR_3^+$, auf.

Wenn die Diffusionsbarriere **D** eine kationenleitende Membran ist, handelt es sich am bevorzugtesten um eine natriumionenleitende Membran.

Kationenleitende Membranen sind beispielsweise beschrieben auf Seite 181 des Lehrbuchs von Volkmar M. Schmidt Elektrochemische Verfahrenstechnik: Grundlagen, Reaktionstechnik, Prozessoptimierung, 1. Auflage (8. Oktober 2003).

Noch bevorzugter werden demnach als kationenleitende Membran organische Polymere, welche insbesondere aus Polyethylen, Polybenzimidazolen, Polyetherketonen, Polystyrol, Polypropylen oder fluorierten Membranen wie Polyperfluorethylen, bevorzugt Polystyrol, Polyperfluorethylen, ausgewählt sind, eingesetzt, wobei diese kovalent gebunden funktionelle Gruppen ausgewählt aus $-SO_3^-$, -COO, $-PO_3^{2-}$, $-PO_2H^-$ , bevorzugt $-SO_3^-$, $-COO^-$, noch bevorzugter $-SO_3$ (beschrieben in DE 102010 062 804 A1, US4,831,146) tragen.

Dies kann zum Beispiel ein sulfoniertes Polyperfluorethylen (Nafion ® mit CAS-Nummer: 31175-20-9) sein. Diese sind dem Fachmann beispielsweise aus der WO 2008/076327 A1, Absatz [058], US 2010/0044242 A1, Absatz [0042] oder der US 2016/ 0204459 A1 bekannt und unter dem Handelsnamen Nafion ®, Aciplex ® F, Flemion ®, Neosepta ®, Ultrex ®, PC-SK ® erwerblich. Neosepta®-Membranen sind beispielsweise beschrieben von S.A. Mareev, D.Yu. Butylskii, N.D. Pismenskaya, C. Larchet, L. Dammak, V.V. Nikonenko, Journal of Membrane Science 2018, 563, 768-776.

Wird eine kationenleitende Membran als Diffusionsbarriere **D** eingesetzt, kann dies beispielsweise ein mit Sulfonsäuregruppen funktionalisiertes Polymer, insbesondere der folgenden Formel $\mathbf{P_{NAFION}}$, wobei n und m unabhängig voneinander eine ganze Zahl von 1 bis $10^6$, bevorzugter eine ganze Zahl von 10 bis $10^5$, noch bevorzugter eine ganze Zahl von $10^2$ bis $10^4$ ist, sein.

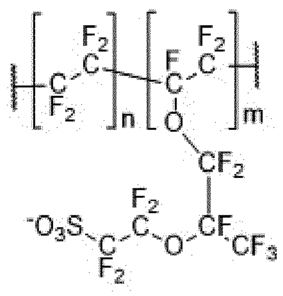

$P_{Nafion}$

Als natriumkationenleitender Festelektrolyt $\mathbf{F_K}$ kommt jeder Festelektrolyt in Frage, welcher Natriumkationen, von der Mittelkammer $\mathbf{K_M}$ in die Kathodenkammer $\mathbf{K_K}$ transportieren kann. Solche Festelektrolyten sind dem Fachmann bekannt und beispielsweise in der DE 10 2015 013 155 A1, in der WO 2012/048032 A2, Absätze [0035], [0039], [0040], in der US 2010/0044242 A1, Absätze [0040], [0041], in der DE 10360758 A1, Absätze [014] bis [025] beschrieben. Sie werden kommerziell unter dem Namen NaSICON vertrieben. Ein natriumionenleitender Festelektrolyt $\mathbf{F_K}$ weist noch bevorzugter eine NaSICON-Struktur auf. Erfindungsgemäß einsetzbare NaSICON-Strukturen sind außerdem beispielsweise beschrieben von N. Anantharamulu, K. Koteswara Rao, G. Rambabu, B. Vijaya Kumar, Velchuri Radha, M. Vithal, J Mater Sei 2011, 46, 2821-2837.

NaSICON hat bevorzugt eine Struktur der Formel $M^{I}_{1+2w+x-y+z}\ M^{II}_{w}\ M^{III}_{x}\ Zr^{IV}_{2-w-x-y}\ M^{V}_{y}\ (SiO_4)_z\ (PO_4)_{3-z}$.

$M^{I}$ ist ausgewählt aus $Na^+$, $Li^+$, bevorzugt $Na^+$.
M" ist ein zweiwertiges Metallkation, bevorzugt ausgewählt aus $Mg^{2+}$, $Ca^{2+}$, $Sr^{2+}$, $Ba^{2+}$, $Co^{2+}$, $Ni^{2+}$, bevorzugter ausgewählt aus $Co^{2+}$, $Ni^{2+}$.
$M^{III}$ ist ein dreiwertiges Metallkation, bevorzugt ausgewählt aus $Al^{3+}$, $Ga^{3+}$, $Sc^{3+}$, $La^{3+}$, $Y^{3+}$, $Gd^{3+}$, $Sm^{3+}$, $Lu^{3+}$, $Fe^{3+}$, $Cr^{3+}$, bevorzugter ausgewählt aus $Sc^{3+}$, $La^{3+}$, $Y^{3+}$, $Gd^{3+}$, $Sm^{3+}$, besonders bevorzugt ausgewählt aus $Sc^{3+}$, $Y^{3+}$, $La^{3+}$.
$M^{V}$ ist ein fünfwertiges Metallkation, bevorzugt ausgewählt aus $V^{5+}$, $Nb^{5+}$, $Ta^{5+}$.

Die römischen Indizes I, II, III, IV, V geben die Oxidationszahlen an, in der die jeweiligen Metallkationen vorliegen.

w, x, y, z sind reelle Zahlen, wobei gilt, dass $0 \leq x < 2$, $0 \leq y < 2$, $0 \leq w < 2$, $0 \leq z < 3$,
und wobei w, x, y, z so gewählt werden, dass gilt $1 + 2w + x - y + z \geq 0$ und $2 - w - x - y \geq 0$.

NaSICON hat erfindungsgemäß noch bevorzugter eine Struktur der Formel $Na_{(1+v)}Zr_2Si_vP_{(3-v)}O_{12}$, wobei v eine reelle Zahl ist, für die $0 \leq v \leq 3$ gilt. Am bevorzugtesten gilt v = 2.4
Die Kathodenkammer $\mathbf{K_K}$ umfasst auch einen Zulauf $\mathbf{Z_{KK}}$ und einen Ablauf $\mathbf{A_{KK}}$, der es ermöglicht, in die Kathodenkammer $\mathbf{K_K}$ Flüssigkeit, wie zum Beispiel die Lösung $\mathbf{L_2}$, zuzufügen und darin befindliche Flüssigkeit, wie zum Beispiel die Lösung $\mathbf{L_1}$, zu entfernen. Der Zulauf $\mathbf{Z_{KK}}$ und der Ablauf $\mathbf{A_{KK}}$ sind dabei so an der Kathodenkammer $\mathbf{K_K}$ angebracht, dass die Lösung beim Durchströmen der Kathodenkammer $\mathbf{K_K}$ die kathodische Elektrode $\mathbf{E_K}$ kontaktiert. Dies ist die Voraussetzung dafür, dass bei der Durchführung des erfindungsgemäßen Verfahrens am Ablauf $\mathbf{A_{KK}}$ die Lösung $\mathbf{L_1}$ erhalten wird, wenn die Lösung $\mathbf{L_2}$ eines Alkalialkoholats XOR im Alkohol ROH durch $\mathbf{K_K}$ geleitet wird.

Die Anodenkammer $\mathbf{K_A}$ umfasst auch einen Ablauf $\mathbf{A_{KA}}$, der es ermöglicht, in der Anodenkammer $\mathbf{K_A}$ befindliche Flüssigkeit, beispielsweise die wässrige Lösung $\mathbf{L_4}$, zu entfernen. Daneben umfasst die Mittelkammer $\mathbf{K_M}$ einen Zulauf $\mathbf{Z_{KM}}$, während $\mathbf{K_A}$ und $\mathbf{K_M}$ durch eine Verbindung $\mathbf{V_{AM}}$ miteinander verbunden sind. Dadurch kann zu $\mathbf{K_M}$ eine Lösung $\mathbf{L_3}$ gegeben und diese dann durch $\mathbf{K_M}$ geleitet werden, und dann über $\mathbf{V_{AM}}$ in die Anodenkammer $\mathbf{K_A}$, dann durch diese $\mathbf{K_A}$ geleitet werden. $\mathbf{V_{AM}}$ und der Ablauf $\mathbf{A_{KA}}$ sind dabei so an der Anodenkammer $\mathbf{K_A}$ angebracht, dass die Lösung $\mathbf{L_3}$ beim Durchströmen der Anodenkammer $\mathbf{K_A}$ die anodische Elektrode $\mathbf{E_A}$ kontaktiert. Dies ist die Voraussetzung dafür, dass bei der Durchführung des erfindungsgemäßen Verfahrens am Ablauf $\mathbf{A_{KA}}$ die wässrige Lösung $\mathbf{L_4}$ erhalten wird, wenn die Lösung $\mathbf{L_3}$ zuerst durch $\mathbf{K_M}$, dann über $\mathbf{V_{AM}}$, dann durch $\mathbf{K_A}$ geleitet wird.

Zuläufe $\mathbf{Z_{KK}}$, $\mathbf{Z_{KM}}$, $\mathbf{Z_{KA}}$ und Abläufe $\mathbf{A_{KK}}$, $\mathbf{A_{KA}}$, $\mathbf{A_{KM}}$ können nach dem Fachmann bekannten Verfahren an der Elektrolysezelle angebracht werden.

Die Mittelkammer $\mathbf{K_M}$ weist erfindungsgemäß einen Gasauslass **G** <120> auf. Als Gasauslass eignet sich jede Öffnung in der Mittelkammer $\mathbf{K_M}$, durch die in der Mittelkammer entstehende Gase, insbesondere COz in die Atmosphäre entweichen können. Der Gasauslass wird bevorzugt so an der Mittelkammer $\mathbf{K_M}$ angebracht, dass das in der Mittelkammer $\mathbf{K_M}$ entstehende COz aus der Mittelkammer $\mathbf{K_M}$ entgegen der Schwerkraft entweichen kann. Bevorzugt erfolgt dies über einen Gasabgang, bevorzugt einen Gasabgang mit Kondensatabscheider, einem Druckventil oder einer Bohrung mit einer angeschlossenen Belüftungsleitung, noch bevorzugter durch eine Bohrung mit angeschlossener Belüftungsleitung.

Die Belüftungsleitung wird mit dem Ablauf $A_{KA}$ <106> (also dem Chlorabzug bzw. dem Soleausgang der Anolytkammer) eingebunden, kann aber alternativ frei abblasend gegen die Atmosphäre betrieben werden. Den Chlorabzug für die Entfernung des COz zu nutzen, hat den Vorteil eines vereinfachten Aufbaus der Elektrolysezelle **E.** Die Abführung des COz unabhängig vom Chlorabzug führt aber zu Verbesserung der Chlorzusammensetzung, da COz nicht mit dem Chlor verdünnt wird. Somit ist es besonders bevorzugt, wenn die Belüftungsleitung nicht mit dem Ablauf $A_{KA}$ <106> (also dem Chlorabzug bzw. dem Soleausgang der Anolytkammer) eingebunden ist, also frei abblasend gegen die Atmosphäre betrieben wird.

Die Verbindung $V_{AM}$ kann innerhalb der Elektrolysezelle **E** und/oder außerhalb der Elektrolysezelle **E** ausgebildet sein.

Ist die Verbindung $V_{AM}$ innerhalb der Elektrolysezelle **E** ausgebildet, wird sie bevorzugt durch mindestens eine Perforation in der Diffusionsbarriere **D** gebildet.

Ist die Verbindung $V_{AM}$ außerhalb der Elektrolysezelle **E** ausgebildet, wird sie bevorzugt durch eine außerhalb der Elektrolysezelle **E** verlaufende Verbindung von $K_M$ und $K_A$ gebildet, insbesondere dadurch, dass in der Mittelkammer $K_M$ ein Ablauf $A_{KM}$ durch die Außenwand $W_A$, bevorzugt am Boden der Mittelkammer $K_M$, wobei noch bevorzugter der Zulauf $Z_{KM}$ an der Oberseite der Mittelkammer $K_M$ ist, gebildet wird, und in der Anodenkammer $K_A$ ein Zulauf $Z_{KA}$ durch die Außenwand $W_A$, bevorzugt am Boden der Anodenkammer $K_A$, gebildet wird, und diese durch eine Leitung, beispielsweise ein Rohr oder ein Schlauch, der bevorzugt ein Material ausgewählt aus Gummi, Kunststoff umfasst, verbunden sind. Der Ablauf $A_{KA}$ ist dann noch bevorzugter an der Oberseite der Anodenkammer $K_A$.

"Ablauf $A_{KM}$ am Boden der Mittelkammer $K_M$" bedeutet, dass der Ablauf $A_{KM}$ so an der Elektrolysezelle **E** angebracht ist, dass die Lösung $L_3$ die Mittelkammer $K_M$ gleichgerichtet mit der Schwerkraft verlässt.

"Zulauf $Z_{KA}$ am Boden der Anodenkammer $K_A$" bedeutet, dass der Zulauf $Z_{KA}$ so an der Elektrolysezelle E angebracht ist, dass die Lösung $L_3$ in die Anodenkammer $K_A$ entgegen der Schwerkraft eintritt.

"Zulauf $Z_{KM}$ an der Oberseite der Mittelkammer $K_M$" bedeutet, dass der Zulauf $Z_{KM}$ so an der Elektrolysezelle **E** angebracht ist, dass die Lösung $L_3$ in die Mittelkammer $K_M$ gleichgerichtet mit der Schwerkraft eintritt.

"Ablauf $A_{KA}$ an der Oberseite der Anodenkammer $K_A$" bedeutet, dass der Ablauf $A_{KA}$ so an der Elektrolysezelle **E** angebracht ist, dass die Lösung $L_4$ in die Anodenkammer $K_A$ entgegen der Schwerkraft verlässt.

Diese Ausführungsform ist dabei besonders vorteilhaft und deshalb bevorzugt, wenn der Ablauf $A_{KM}$ durch die Außenwand $W_A$ am Boden der Mittelkammer $K_M$, und der Zulauf $Z_{KA}$ durch die Außenwand $W_A$ am Boden der Anodenkammer $K_A$, gebildet wird. Durch diese Anordnung ist es besonders einfach möglich, in der Mittelkammer $K_M$ entstehende Gase durch den Gasauslass G von $L_3$ abzutrennen, während in der Anodenkammer $K_A$ gebildete Gase mit $L_4$ die Anodenkammer $K_A$ verlassen und dann weiter abgetrennt werden können.

Demnach ist die Fließrichtung von $L_3$ in $K_M$ der Fließrichtung von $L_3$ in $K_A$ entgegengerichtet oder gleichgerichtet, bevorzugt entgegengerichtet, je nachdem wie die Verbindung $V_{AM}$ an der Elektrolysezelle **E** angebracht ist. Bevorzugt ist die Fließrichtung von $L_3$ in $K_M$ der Schwerkraft gleichgerichtet.

In einer bevorzugten Ausführungsform der vorliegenden Erfindung wird Verbindung $V_{AM}$ zwischen Mittelkammer $K_M$ und Anodenkammer $K_A$ so angeordnet, dass mindestens ein Teil der wässrigen Lösung $L_3$, bevorzugter die gesamte wässrige Lösung $L_3$, die Mittelkammer $K_M$ und die Anodenkammer $K_A$ vollständig durchströmt.

Wenn die Verbindung $V_{AM}$ <112> außerhalb der Elektrolysezelle **E** <100> ausgebildet ist, kann dies insbesondere dadurch gewährleistet werden, dass $Z_{KM}$ <108> und $A_{KM}$ <118> an gegenüberliegenden Seiten der Außenwand $W_A$ <117> der Mittelkammer $K_M$ <103> angeordnet sind (also $Z_{KM}$ <108> am Boden und $A_{KM}$ <118> an der Oberseite der Elektrolysezelle **E** <100> oder umgekehrt, bevorzugt umgekehrt) und $Z_{KA}$ <119> und $A_{KA}$ <106> an gegenüberliegenden Seiten der Außenwand $W_A$ <117> der Anodenkammer $K_A$ <101 > angeordnet ist (also, was bevorzugt ist, $Z_{KA}$ <119> am Boden und $A_{KA}$ <106> an der Oberseite der Elektrolysezelle **E** <100> oder umgekehrt), wie es insbesondere in Abbildung 1 gezeigt ist. Durch diese Geometrie muss $L_3$ <114> die beiden Kammern $K_M$ <103> und $K_A$ <101 > durchströmen. Dabei können $Z_{KA}$ <119> und $Z_{KM}$ <108> an derselben Seite der Elektrolysezelle **E** <100> ausgebildet sein, wobei dann automatisch auch $A_{KM}$ <118> und $A_{KA}$ <106> an derselben Seite der Elektrolysezelle E <100> ausgebildet sind. Alternativ können wie in Abbildung 1 gezeigt, $Z_{KA}$ <119> und $Z_{KM}$ <108> an gegenüberliegenden Seiten der Elektrolysezelle **E** <100> ausgebildet sein, wobei dann automatisch auch $A_{KM}$ <118> und $A_{KA}$ <106> an gegenüberliegenden Seiten der Elektrolysezelle **E** <100> ausgebildet sind.

Wenn die Verbindung $V_{AM}$ <112> innerhalb der Elektrolysezelle **E** <100> ausgebildet ist, kann dies insbesondere dadurch gewährleistet werden, dass eine Seite ("Seite A") der Elektrolysezelle **E** <100>, bei der es sich um die Oberseite oder den Boden der Elektrolysezelle **E** <100> handelt, bevorzugt wie in Abbildung 2 gezeigt um die Oberseite handelt, den Zulauf $Z_{KM}$ <108> und den Ablauf $A_{KA}$ <106> umfasst und die Diffusionsbarriere **D** <110> ausgehend von dieser Seite A sich in die Elektrolysezelle <100> erstreckt, aber nicht ganz bis zur der der Seite A gegenüberliegenden Seite ("Seite B") der Elektrolysezelle **E** <100>, bei der es dann sich um den Boden bzw. die Oberseite der Elektrolysezelle **E** <100> handelt, reicht und dabei 50 % oder mehr der Höhe der Dreikammerzelle **E** <100>, bevorzugter 60 % bis 99 % der Höhe der Dreikammerzelle **E** <100>, noch bevorzugter 70 % bis 95 % der Höhe der Dreikammerzelle **E** <100>,

noch mehr bevorzugter 80 % bis 90 % der Höhe der Dreikammerzelle **E** <100>, noch viel mehr bevorzugter 85 % der Höhe der Dreikammerzelle **E** <100> durchspannt. Dadurch dass die Diffusionsbarriere **D** <110> die Seite B der Dreikammerzelle **E** <100> nicht berührt, entsteht so ein Spalt zwischen Diffusionsbarriere **D** <110> und der Außenwand $\mathbf{W_A}$ der Seite B der Dreikammerzelle **E** <100>. Der Spalt ist dann die Verbindung $\mathbf{V_{AM}}$ <112>. Durch diese Geometrie muss $\mathbf{L_3}$ die beiden Kammern $\mathbf{K_M}$ und $\mathbf{K_A}$ vollständig durchströmen.

Diese Ausführungsformen gewährleisten am besten, dass am säureempfindlichen Festelektrolyten die wässrige Salzlösung $\mathbf{L_3}$ vorbeiströmt, bevor diese mit der anodischen Elektrode $\mathbf{E_A}$ <104> in Kontakt kommt, wodurch es zur Bildung von Säuren kommt.

Des Weiteren ist es insbesondere in diesen Ausführungsformen bevorzugt, wenn der Gasauslass **G** an der Oberseite der Mittelkammer $\mathbf{K_M}$ angebracht ist, da dadurch am besten gewährleistet wird, dass nur COz die Mittelkammer verlässt, aber möglichst wenig der Lösung $\mathbf{L_3}$.

"Boden der Elektrolysezelle **E**" ist erfindungsgemäß die Seite der Elektrolysezelle **E,** durch die eine Lösung (z.B. $\mathbf{L_3}$ <114> bei $\mathbf{A_{KM}}$ <118> in Abbildung 1) in Richtung der Schwerkraft aus der Elektrolysezelle **E** austritt bzw. die Seite der Elektrolysezelle **E,** durch die eine Lösung (z.B. $\mathbf{L_2}$ <113> bei $\mathbf{Z_{KK}}$ <107> in Abbildungen 1 und 2 und $\mathbf{L_3}$ <114> bei $\mathbf{A_{KA}}$ <119> in Abbildung 1) der Elektrolysezelle **E** entgegen der Schwerkraft zugeführt wird.

"Oberseite der Elektrolysezelle **E"** ist erfindungsgemäß die Seite der Elektrolysezelle **E,** durch die eine Lösung (z.B. $\mathbf{L_4}$ <116> bei $\mathbf{A_{KA}}$ <106> und $\mathbf{L_1}$ <115> bei $\mathbf{A_{KK}}$ <109> in Abbildungen 1 und 2) entgegen der Schwerkraft aus der Elektrolysezelle **E** austritt bzw. die Seite der Elektrolysezelle **E,** durch die eine Lösung (z.B. $\mathbf{L_3}$ <114> bei $\mathbf{Z_{KM}}$ <108> in Abbildungen 1 und 2) der Elektrolysezelle **E** in Richtung der Schwerkraft zugeführt wird.

4.2 Erfindungsgemäße Verfahrensschritte

Das erfindungsgemäße Verfahren umfasst die folgenden Schritte (a), (b) und (c), welche gleichzeitig durchgeführt werden.

Im Schritt (a) wird eine Lösung $\mathbf{L_2}$ umfassend den Alkohol ROH, bevorzugt umfassend ein Natriumalkoholat NaOR im Alkohol ROH, durch $\mathbf{K_K}$ geleitet. R ist ein Alkylrest mit 1 bis 4 Kohlenstoffatomen.

R ist bevorzugt aus der Gruppe bestehend aus *n*-Propyl, *iso*-Propyl, Ethyl, Methyl ausgewählt, bevorzugter aus der Gruppe bestehend aus Ethyl, Methyl ausgewählt. Am bevorzugtesten ist R Methyl.

Die Lösung $\mathbf{L_2}$ ist bevorzugt frei von Wasser. "Frei von Wasser" bedeutet erfindungsgemäß, dass das Gewicht des Wassers in der Lösung $\mathbf{L_2}$ bezogen auf das Gewichts des Alkohols ROH in der Lösung $\mathbf{L_2}$ (Massenverhältnis) $\leq$ 1 : 10, bevorzugter $\leq$ 1 : 20, noch bevorzugter $\leq$ 1 : 100, noch bevorzugter $\leq$ 0.5 : 100 ist.

Umfasst die Lösung $\mathbf{L_2}$ NaOR, so liegt der Massenanteil von NaOR in der Lösung $\mathbf{L_2}$, bezogen auf die gesamte Lösung $\mathbf{L_2}$, insbesondere bei > 0 bis 30 Gew.-%, bevorzugt bei 5 bis 20 Gew.-%, noch bevorzugter bei 10 bis 20 Gew.-%, noch bevorzugter bei 10 bis 15 Gew.-%, am bevorzugtesten bei 13 bis 14 Gew.-%, am allerbevorzugtesten bei 13 Gew.-%.

Umfasst die Lösung $\mathbf{L_2}$ NaOR, so liegt in der Lösung $\mathbf{L_2}$ insbesondere das Massenverhältnis von NaOR zu Alkohol ROH im Bereich 1 : 100 bis 1 : 5, bevorzugter im Bereich 1 : 25 bis 3 : 20, noch bevorzugter im Bereich 1 : 12 bis 1 : 8, noch bevorzugter bei 1 : 10.

In Schritt (b) wird eine neutrale oder alkalische, wässrige Lösung $\mathbf{L_3}$ umfassend NaCl und mindestens ein Salz **S** ausgewählt aus Hydrogencarbonat, Carbonat durch $\mathbf{K_M}$ <103>, dann über $\mathbf{V_{AM}}$ <112>, dann durch $\mathbf{K_A}$ <101 > geleitet.

Das Salz **S** ist insbesondere ausgewählt aus Natriumhydrogencarbonat, Natriumcarbonat.

Der pH der wässrigen Lösung $\mathbf{L_3}$ ist dabei $\geq$ 7.0, bevorzugt im Bereich 7 bis 12, bevorzugter im Bereich 8 bis 11, noch bevorzugter 10 bis 11, am bevorzugtesten bei 10.5.

Der Massenanteil von NaCl in der Lösung $\mathbf{L_3}$ liegt dabei bevorzugt im Bereich > 0 bis 20 Gew.-%, bevorzugt 1 bis 20 Gew.-%, bevorzugter bei 5 bis 20 Gew.-%, noch bevorzugter bei 10 bis 20 Gew.-%, am bevorzugtesten bei 20 Gew.-%, bezogen auf die gesamte Lösung $\mathbf{L_3}$.

Der Massenanteil des Salzes **S** in der Lösung $\mathbf{L_3}$ liegt dabei bevorzugt im Bereich 0.1 ppm bis 10 Gew.-%, bevorzugter im Bereich 1 ppm bis 5 Gew.-%, noch bevorzugter 10 ppm bis 1 Gew.-%, noch mehr bevorzugter 20 ppm bis 400 ppm, besonders bevorzugt 20 bis 100 ppm.

Im Schritt (c) wird dann eine Spannung zwischen $\mathbf{E_A}$ und $\mathbf{E_K}$ angelegt. Dadurch kommt es zu einem Stromtransport von der Ladungsquelle zur Anode, zu einem Ladungstransport über Ionen zur Kathode und schließlich zu einem Stromtransport zurück zur Ladungsquelle. Die Ladungsquelle ist dem Fachmann bekannt und ist typischerweise ein Gleichrichter, der Wechselstrom in Gleichstrom umwandelt und über Spannungsumwandler bestimmte Spannungen erzeugen kann.

Dies führt wiederum zu folgenden Konsequenzen:

am Ablauf $\mathbf{A_{KK}}$ <109> wird die Lösung $\mathbf{L_1}$ <115> erhalten, wobei die Konzentration von NaOR in $\mathbf{L_1}$ <115> höher ist als in $\mathbf{L_2}$ <113>,

am Ablauf $A_{KA}$ <106> wird eine wässrige Lösung $L_4$ <116> von NaCl erhalten, wobei die Konzentration von NaCl in $L_4$ <116> geringer ist als in $L_3$ <114>, und wobei die Gesamtkonzentration aller Salze S in $L_4$ <116> geringer ist als in $L_3$ <114>,

in der Mittelkammer $K_M$ <103> entsteht COz <121>, welches über den Gasauslass **G** <120> aus der Mittelkammer $K_M$ <103> abgeführt wird.

Im erfindungsgemäßen Verfahren wird insbesondere eine solche Spannung angelegt, dass so ein Strom fließt, so dass die Stromdichte (= Verhältnis des Stroms zur Elektrolysezelle zur Fläche des Festelektrolyten, die den in der Mittelkammer $K_M$ befindlichen Anolyten kontaktiert) im Bereich von 10 bis 8000 A/ $m^2$ liegt, bevorzugter im Bereich von 100 bis 2000 A/ $m^2$ liegt, noch bevorzugter im Bereich von 300 bis 800 A/ $m^2$ liegt und am bevorzugtesten bei 363 A/ $m^2$ liegt. Dies kann vom Fachmann standardmäßig bestimmt werden. Die Fläche des Festelektrolyten, die den in der Mittelkammer $K_M$ befindlichen Anolyten kontaktiert, beträgt insbesondere 0.0001 bis 10 $m^2$, bevorzugt 0.001 bis 2.5 $m^2$, bevorzugter 0.022 bis 0.15 $m^2$, noch bevorzugter 0.022 bis 0.03 $m^2$.

Es versteht sich von selbst, dass im erfindungsgemäßen Verfahren Schritt (c) dann durchgeführt wird, wenn beide Kammern $K_M$ und $K_A$ mindestens teilweise mit $L_3$ beladen sind und $K_K$ mit $L_2$ mindestens teilweise beladen ist.

Die Tatsache, dass in Schritt (c) ein Ladungstransport zwischen $E_A$ und $E_K$ stattfindet, impliziert, dass $K_K$, $K_M$ und $K_A$ gleichzeitig mit $L_2$ bzw. $L_3$ so beladen sind, dass sie die Elektroden $E_A$ und $E_K$ soweit bedecken, dass der Stromkreislauf geschlossen ist.

Das ist insbesondere dann der Fall, wenn kontinuierlich ein Flüssigkeitsstrom von $L_3$ durch $K_M$, $V_{AM}$ und $K_A$ und ein Flüssigkeitsstrom von $L_2$ durch $K_K$ geleitet wird und der Flüssigkeitsstrom von $L_3$ die Elektrode $E_A$ und der Flüssigkeitsstrom von $L_2$ die Elektrode $E_K$ mindestens teilweise, bevorzugt vollständig bedeckt.

In einer weiteren bevorzugten Ausführungsform wird das erfindungsgemäße Verfahren kontinuierlich durchgeführt, also Schritt (a) und Schritt (b) kontinuierlich durchgeführt und dabei gemäß Schritt (c) Spannung angelegt.

Während der Durchführung des Schrittes (c) entsteht insbesondere durch Absinken des pH in der Mittelkammer $K_M$ COz, welches über den Gasauslass **G** <120> aus der Mittelkammer $K_M$ <103> abgeführt wird, insbesondere wie oben beschrieben frei abblasend gegen die Atmosphäre.

Nach Durchführung des Schrittes (c) wird am Ablauf $A_{KK}$ die Lösung $L_1$ erhalten, wobei die Konzentration von NaOR in $L_1$ höher ist als in $L_2$. Wenn $L_2$ schon NaOR umfasste, ist die Konzentration von NaOR in $L_1$ bevorzugt um das 1.01 bis 2.2-fache, bevorzugter um das 1.04 bis 1.8-fache, noch bevorzugter um das 1.077 bis 1.4-fache, noch mehr bevorzugter um das 1.077 bis 1.08-fache höher als in $L_2$, am bevorzugtesten um das 1.077-fache höher als in $L_2$, wobei noch bevorzugter dabei der Massenanteil von XOR in $L_1$ und in $L_2$ im Bereich 10 bis 20 Gew.-%, noch mehr bevorzugter 13 bis 14 Gew.-% liegt.

Am Ablauf $A_{KA}$ wird eine wässrige Lösung $L_4$ von NaCl und gegebenenfalls auch **S** erhalten wird, wobei die Gesamtkonzentration von NaCl in $L_4$ geringer ist als von NaCl in $L_3$.

Die Gesamtkonzentration aller Salze **S** in $L_4$ ist geringer ist als die Gesamtkonzentration aller Salze **S** in $L_3$, insbesondere ist der Massenanteil aller Salze S in $L_4$ um 5 % bis 95 % geringer, bevorzugt um 10 bis 90 % geringer, bevorzugter um 20 bis 80 % geringer, noch bevorzugter um 30 bis 70 % geringer, noch mehr bevorzugter um 40 bis 60 % geringer, noch viel mehr bevorzugter um 50 % geringer als der Massenanteil aller Salze **S** in $L_3$.

Die Konzentration des Natriumchlorids in der wässrigen Lösung $L_3$ liegt bevorzugt im Bereich 3.5 bis 5 mol/l, bevorzugter 4 mol/l. Die Konzentration des Natriumchlorids in der wässrigen Lösung $L_4$ ist bevorzugter 0.5 mol/l geringer als jene der jeweils eingesetzten wässrigen Lösung $L_3$.

Insbesondere wird am Ablauf $A_{KA}$ auch $Cl_2$ erhalten. Dieses disproportioniert gemäß der obigen Gleichung (4) und gast in der Anodenkammer $K_A$ bevorzugt aus. Es wird typischerweise mit der wässrigen Lösung $L_4$ am Ablauf $A_{KA}$ aus der Elektrolysezelle **E** entfernt.

Insbesondere wird das erfindungsgemäße Verfahren bei einer Temperatur von 20 °C bis 70 °C, bevorzugt 35 °C bis 65 °C, bevorzugter 50 °C bis 65 °C und einem Druck von 0.5 bar bis 1.5 bar, bevorzugt 0.9 bar bis 1.1 bar, bevorzugter 1.0 bar durchgeführt.

Bei der Durchführung des erfindungsgemäßen Verfahrens entsteht in der in der Kathodenkammer $K_K$ typischerweise Wasserstoff, der über den Ablauf $A_{KK}$ aus der Zelle zusammen mit der Lösung $L_1$ abgeführt werden kann. Die Mischung aus Wasserstoff und Lösung **L,** kann dann in einer besonderen Ausführungsform der vorliegenden Erfindung nach dem Fachmann bekannten Verfahren aufgetrennt werden. In der Anodenkammer $K_A$ entsteht insbesondere Chlor oder ein anderes Halogengas entstehen, welches über den Ablauf $A_{KA}$ aus der Zelle zusammen mit der Lösung $L_4$ abgeführt werden kann. Daneben entsteht in der Anodenkammer $K_A$ insbesondere auch Kohlendioxid, was ebenso abgeführt werden kann. Chlor und/oder COz kann dann in einer besonderen Ausführungsform der vorliegenden Erfindung nach dem Fachmann bekannten Verfahren von der Lösung $L_4$ abgetrennt werden. Genauso kann dann nach Abtrennung der Gase die Mischung aus Chlor und COz von der Lösung $L_4$ nach dem Fachmann bekannten Verfahren voneinander abgetrennt werden.

Es ist bevorzugt, einen weiteren Gasauslass $\mathbf{G_2}$ auch in der Anodenkammer $\mathbf{K_A}$ anzubringen, mit Hilfe dessen COz gegebenenfalls in Mischung mit Chlor direkt nach Entstehung in der Anodenkammer $\mathbf{K_A}$ entfernt werden kann. Der Gasauslass $\mathbf{G_2}$ wird bevorzugt so an der Anodenkammer $\mathbf{K_A}$ angebracht, dass das in der Anodenkammer $\mathbf{K_A}$ entstehende COz gegebenenfalls zusammen mit dem während der Elektrolyse gebildeten Clz und/oder gegebenenfalls gebildeten Oz aus der Anodenkammer $\mathbf{K_A}$ entgegen der Schwerkraft entweichen kann.

Diese Ergebnisse waren überraschend und im Lichte des Standes der Technik nicht zu erwarten. Durch das erfindungsgemäße Verfahren wird der säurelabile Feststoffelektrolyt vor Korrosion geschützt, ohne dass dabei wie im Stand der Technik Alkoholatlösung aus dem Kathodenraum als Pufferlösung geopfert werden muss. Damit ist das erfindungsgemäße Verfahren effizienter als die in WO 2008/076327 A1 beschriebene Vorgehensweise, in der die Produktlösung für die Mittelkammer verwendet wird, was den Gesamtumsatz schmälert.

Daneben wird der Aufbau eines Gaspolsters aus COz in der Mittelkammer $\mathbf{K_M}$ verhindert und so ein energieeffizienteres Verfahren ermöglicht.

**Bevorzugte Ausführungsformen der Erfindung**

Abbildung 1 zeigt eine bevorzugte Ausführungsform der Erfindung in einer Dreikammerzelle **E** <100>. Diese umfasst eine Kathodenkammer $\mathbf{K_K}$ <102>, eine Mittelkammer $\mathbf{K_M}$ <103> und eine Anodenkammer $\mathbf{K_A}$ <101>. Die Anodenkammer $\mathbf{K_A}$ <101 > und die Mittelkammer $\mathbf{K_M}$ <103> sind durch eine sich über den ganzen Querschnitt der Dreikammerzelle **E** <100> erstreckende Anionenaustauschermembran als Diffusionsbarriere **D** <110> voneinander getrennt. Die Kathodenkammer $\mathbf{K_K}$ <102> und die Mittelkammer $\mathbf{K_M}$ <103> sind durch einen für Natriumionen selektiven permeable Festelektrolyten (NaSICON) <111> voneinander getrennt, der sich über den ganzen Querschnitt der Dreikammerzelle **E** <100> erstreckt. Die Kathodenkammer $\mathbf{K_K}$ <102> umfasst eine kathodische Elektrode $\mathbf{E_K}$ <105>, einen Zulauf $\mathbf{Z_{KK}}$ <107> und einen Ablauf $\mathbf{A_{KK}}$ <109>.

Die Anodenkammer $\mathbf{K_A}$ <101> umfasst eine anodische Elektrode $\mathbf{E_A}$ <104> und einen Ablauf $\mathbf{A_{KA}}$ <106> und ist mit der Mittelkammer $\mathbf{K_M}$ <103> über die Verbindung $\mathbf{V_{AM}}$ <112> verbunden. Die Mittelkammer $\mathbf{K_M}$ <103> umfasst daneben einen Zulauf $\mathbf{Z_{KM}}$ <108> und einen Gasauslass **G** <120>. In der Ausführungsform gemäß Abbildung 1 wird die Verbindung $\mathbf{V_{AM}}$ <112> außerhalb der Elektrolysezelle E <100> ausgebildet, insbesondere durch ein Rohr oder Schlauch, dessen Material aus Gummi oder Kunststoff ausgewählt sein kann, gebildet, mit welcher Flüssigkeit aus der Mittelkammer $\mathbf{K_M}$ <103> in die Anodenkammer $\mathbf{K_A}$ <101 > außerhalb der Außenwand $\mathbf{W_A}$ <117> der Dreikammerzelle **E** <100> geleitet werden kann. Die Verbindung $\mathbf{V_{AM}}$ <112> verbindet einen Ablauf $\mathbf{A_{KM}}$ <118>, der am Boden der Mittelkammer $\mathbf{K_M}$ <103> die Außenwand $\mathbf{W_A}$ <117> der Elektrolysezelle **E** <100> durchbricht, mit einem Zulauf $\mathbf{Z_{KA}}$ <119>, der am Boden der Anodenkammer $\mathbf{K_A}$ <101 > die Außenwand $\mathbf{W_A}$ <117> der Elektrolysezelle **E** <100> durchbricht.

Über den Zulauf $\mathbf{Z_{KK}}$ <107> wird ein Elektrolyt $\mathbf{L_2}$ <113> in die Kathodenkammer $\mathbf{K_K}$ <102> geleitet. Der Elektrolyt $\mathbf{L_2}$ <113> umfasst Methanol, bevorzugt wird als Elektrolyt $\mathbf{L_2}$ <113> eine methanolische Lösung von Natriummethanolat $\mathbf{L_2}$ <113> eingesetzt.

Über den Zulauf $\mathbf{Z_{KM}}$ <108> wird gleichzeitig in die Mittelkammer $\mathbf{K_M}$ <103> eine wässrige NaCl-Lösung $\mathbf{L_3}$ <114> mit pH 10.5 und einem Gesamtmassenanteil von Natriumhydrogencarbonat und Natriumcarbonat von insgesamt 20 bis 100 ppm eingeleitet. Diese strömt durch die Mittelkammer $\mathbf{K_M}$ <103> und die Verbindung $\mathbf{V_{AM}}$ <112> in die Anodenkammer $\mathbf{K_A}$ <101 >.

Es wird dabei eine Spannung zwischen der kathodischen Elektrode $\mathbf{E_K}$ <105> und der anodischen Elektrode $\mathbf{E_A}$ <104> angelegt. Dadurch wird in der Kathodenkammer $\mathbf{K_K}$ <102> Methanol im Elektrolyten $\mathbf{L_2}$ <113> zu Methanolat und $H_2$ reduziert ($CH_3OH + e \rightarrow CH_3O^- + ½ H_2$). In der Anodenkammer $\mathbf{K_A}$ <101> findet die Oxidation von Chloridionen zu molekularem Chlor statt ($Cl^- \rightarrow ½ Cl_2 + e$-). Chlorgas Clz bildet in Wasser gemäß der Reaktion $Cl_2 + H_2O$ ---> HOCl + HCl hypochlorige Säure und Salzsäure, welche mit weiteren Wassermolekülen sauer reagieren. Die Acidität würde den NaSICON-Festelektrolyten <111> schädigen, wird aber durch die erfindungsgemäße Anordnung in der Anodenkammer $\mathbf{K_A}$ <101 > begrenzt und somit in der Elektrolysezelle **E** <100> vom NaSICON-Festelektrolyten $\mathbf{F_K}$ <111> ferngehalten. Dadurch erhöht sich dessen Lebensdauer beträchtlich. Diese Acidität reicht dennoch aus, um $HCO_3^-$ und $CO_3^{2-}$ zu Kohlensäure zu protonieren aus welcher dann gemäß dem Gleichgewicht (5)

$$H_2CO_3 \leftrightarrow COz + H_2O \qquad (5)$$

Kohlenstoffdioxid <121> ausgast. Dieses kann aus der Mittelkammer $\mathbf{K_M}$ <103> durch den Gasauslass **G** <121 > entweichen.

Natriumionen diffundieren dabei von der Mittelkammer $\mathbf{K_M}$ <103> durch den NaSICON-Festelektrolyten <111 > in die Kathodenkammer $\mathbf{K_K}$ <102>. Insgesamt erhöht sich dadurch die Konzentration von Natriummethanolat in der Kathodenkammer $\mathbf{K_K}$ <102>, wodurch eine methanolische Lösung von Natriummethanolat $\mathbf{L_1}$ <115> erhalten wird, deren Konzentration von Natriummethanolat gegenüber $\mathbf{L_2}$ <113> erhöht wird. Aufgrund der Geometrie der Dreikammerzelle **E** <100> und der erfindungsgemäßen Führung der wässrigen Lösung $\mathbf{L_3}$ <114> wird der säureempfindliche

NaSICON-Festelektrolyt <111> vor der gegenüber $\mathbf{L_3}$ <114> erhöhten Acidität der in der Anodenkammer $\mathbf{K_A}$ <101 > resultierenden Lösung $\mathbf{L_4}$ <116> geschützt.

Gleichzeitig entsteht in der Anodenkammer $\mathbf{K_A}$ <101 > an der Anode $\mathbf{E_A}$ <104> Chlorgas, was zusammen mit der Lösung $\mathbf{L_4}$ <116> über den Ablauf $\mathbf{A_{KA}}$ <106> entnommen wird.

Die in Abbildung 2 gezeigte Ausführungsform der vorliegenden Erfindung entspricht der in Abbildung 1 gezeigten. Der einzige Unterschied ist dabei, dass die Verbindung $\mathbf{V_{AM}}$ <112> innerhalb der Elektrolysezelle **E** <100> dergestalt ausgebildet ist, dass sich die Diffusionsbarriere **D** <110> nicht über den gesamten Querschnitt der Dreikammerzelle **E** <100> erstreckt. Die Verbindung $\mathbf{V_{AM}}$ <112> von der Mittelkammer $\mathbf{K_M}$ <103> in die Anodenkammer $\mathbf{K_A}$ <101 > wird dadurch durch einen Spalt in der Diffusionsbarriere **D** <110> gebildet. Es können in weiteren bevorzugten Ausführungsformen der vorliegenden Erfindung auch Diffusionsbarrieren **D** <110> mit mehr als einem Spalt genutzt werden, so dass sich die Verbindung $\mathbf{V_{AM}}$ <112> zwischen Mittelkammer $\mathbf{K_M}$ <103> und Anodenkammer $\mathbf{K_A}$ <101 > durch mehrere Spalten ausbildet.

## Beispiele

Vergleichsbeispiel 1

Natriummethylat (NM) wurde über einen kathodischen Prozess hergestellt, wobei in der Mittelkammer als Anolyt 20 Gew.-%-ige NaCl-Lösung (in Wasser) und in der Kathodenkammer 10 Gew-%-ige methanolische NM-Lösung zugeführt werden. Die NaCl-Lösung umfasste 0.04 Gew.-% $Na_2CO_3$.

Dabei bestand die Elektrolysezelle aus drei Kammern, wie in Abbildung 1 gezeigt, wobei der Anolyt durch die mittlere Kammer in die Anodenkammer überführt wurde. Die Verbindung zwischen Mittel- und Anodenkammer wird durch einen Schlauch, der am Boden der Elektrolysezelle angebracht ist, hergestellt. Die Anodenkammer und mittlere Kammer waren durch eine 0.03 $m^2$ Kationenaustauschermembran (Asai Kasai, F 6801, Polytetrafluorethylen, mit Sulfonatgruppen und Carboxylatgruppen) getrennt. Kathoden und Mittelkammer waren durch eine Keramik vom Typ NaSICON mit einer Fläche von 0.022 $m^2$ getrennt. Die Keramik hat eine chemische Zusammensetzung der Formel $Na_{3.4}Zr_{2.0}Si_{2.4}P_{0.6}O_{12}$. Die Durchflussrate des Anolyten betrug 1 l/h, jene des Katholyten betrug 3.5 l/h, und es wurde ein Strom von 8 A angelegt. Die Temperatur betrug 65 °C. Es wurde festgestellt, dass sich in der Mittelkammer über längere Zeit ein Gaskissen aus COz bildet, was auf die Carbonate in der Sole zurückzuführen ist. Dies führt zu einem anstieg der Spannung.
Der Spannungsverlauf als Änderung der Anfangsspannung (in %) über die Zeit (in Stunden) ist in Abbildung 3 dargestellt (♦).

Erfinderisches Beispiel

Vergleichsbeispiel 1 wurde wiederholt, nur dass in die Mittelkammer neben dem Zulauf des Anolyten eine Bohrung mit 2 mm Durchmesser angebracht wurde. Auf diese Bohrung wurde eine Belüftungsleitung aufgesetzt.

Vergleichsbeispiel 1 wurde mit dieser Elektrolysezelle wiederholt. Die gemessene Spannung über die Zeit entsprach dabei der in Vergleichsbeispiel 1 anfangs gemessenen Spannung. Im Gegensatz zu Beispiel 1 steigt die Spannung nicht über die Versuchsdauer (siehe Abbildung 3, ■).

Des Weiteren sind deutlich Gasblasen zu erkennen, die durch den zusätzlichen Gasausgang entweichen. Dadurch wurde aber die Ausbildung eines COz-Polsters in der Mittelkammer unterbunden.

Ergebnis

Durch die Verwendung einer Dreikammerzelle wie im erfindungsgemäßen Verfahren wird die Korrosion des Festelektrolyten verhindert, wobei gleichzeitig kein Alkalialkoholatprodukt für die Mittelkammer geopfert werden muss.

Des Weiteren ist es durch die Ausbildung eines Gasabzugs in der Mittelkammer möglich, auch mit Carbonaten oder Hydrogencarbonaten vorbehandelte und diese zumindest teilweise enthaltende Sole in der Elektrolyse einzusetzen, ohne dass sich in der Mittelkammer der Elektrolysezelle ein Gaskissen ausbildet. Daneben wird auch der Gehalt von COz im in der Anodenkammer erzeugten Chlorgas deutlich reduziert, was die nachfolgende Abtrennung des COz aus Chlor erleichtert.

## Patentansprüche

1. Verfahren zur Herstellung einer Lösung $\mathbf{L_1}$ <115> eines Natriumalkoholats NaOR im Alkohol ROH in einer Elektrolysezelle **E** <100>,

wobei **E** <100> mindestens eine Anodenkammer **$K_A$** <101>, mindestens eine Kathodenkammer **$K_K$** <102> und mindestens eine dazwischen liegende Mittelkammer **$K_M$** <103> umfasst,
wobei **$K_A$** <101 > eine anodische Elektrode **$E_A$** <104> und einen Ablauf **$A_{KA}$** <106> umfasst,
wobei **$K_K$** <102> eine kathodische Elektrode **$E_K$** <105>, einen Zulauf **$Z_{KK}$** <107> und einen Ablauf **$A_{KK}$** <109> umfasst,
wobei **$K_M$** <103> einen Zulauf **$Z_{KM}$** <108> und einen Gasauslass **G** <120> umfasst, durch eine Diffusionsbarriere **D** <110> von **$K_A$** <101 > abgetrennt ist und durch einen natriumkationenleitenden Festelektrolyten **$F_K$** <111> von **$K_K$** <102> abgetrennt ist,
wobei **$K_A$** <101 > und **$K_M$** <103> durch eine Verbindung **$V_{AM}$** <112> miteinander verbunden sind, durch welche Flüssigkeit aus **$K_M$** <103> in **$K_A$** <101 > geleitet werden kann,
wobei das Verfahren die folgenden, gleichzeitig ablaufenden Schritte (a), (b) und (c) umfasst:

(a) ein Lösung **$L_2$** <113> umfassend den Alkohol ROH wird durch **$K_K$** <102> geleitet,
(b) eine neutrale oder alkalische, wässrige Lösung **$L_3$** <114> umfassend NaCl und mindestens ein Salz **S** ausgewählt aus Hydrogencarbonat, Carbonat wird durch **$K_M$** <103>, dann über **$V_{AM}$** <112>, dann durch **$K_A$** <101> geleitet,
(c) zwischen **$E_A$** <104> und **$E_K$** <105> wird Spannung angelegt,

wodurch am Ablauf **$A_{KK}$** <109> die Lösung **$L_1$** <115> erhalten wird, wobei die Konzentration von NaOR in **$L_1$** <115> höher ist als in **$L_2$** <113>,
und wodurch am Ablauf **$A_{KA}$** <106> eine wässrige Lösung **$L_4$** <116> von NaCl erhalten wird, wobei die Konzentration von NaCl in **$L_4$** <116> geringer ist als in **$L_3$** <114>, und wobei die Gesamtkonzentration aller Salze **S** in **$L_4$** <116> geringer ist als in **$L_3$** <114>,
und wodurch in der Mittelkammer **$K_M$** <103> COz <121> entsteht, welches über den Gasauslass **G** <120> aus der Mittelkammer **$K_M$** <103> abgeführt wird,
wobei R ein Alkylrest mit 1 bis 4 Kohlenstoffatomen ist.

**2.** Verfahren nach Anspruch 1, wobei R aus der Gruppe bestehend aus Methyl, Ethyl ausgewählt ist.

**3.** Verfahren nach Anspruch 1 oder 2, wobei die Diffusionsbarriere **D** <110> aus der Gruppe bestehend aus kationenleitenden, anionenleitenden Membranen ausgewählt ist.

**4.** Verfahren nach Anspruch 3, wobei die Diffusionsbarriere **D** <110> eine Natriumkationen leitende Membran ist.

**5.** Verfahren nach einem der Ansprüche 1 bis 4, wobei die Fließrichtung von **$L_3$** <114> in der Mittelkammer **$K_M$** <103> der Fließrichtung von **$L_3$** <114> in der Anodenkammer **$K_A$** <101 > entgegengerichtet ist.

**6.** Verfahren nach einem der Ansprüche 1 bis 5, wobei die Verbindung **$V_{AM}$** <112> innerhalb und/oder außerhalb der Elektrolysezelle **E** <100> ausgebildet ist.

**7.** Verfahren nach einem der Ansprüche 1 bis 6, wobei die Verbindung **$V_{AM}$** <112> zwischen Mittelkammer **$K_M$** <103> und Anodenkammer **$K_A$** <101> so angeordnet ist, dass mindestens ein Teil der wässrigen Lösung **$L_3$** <114> die Mittelkammer **$K_M$** <103> und die Anodenkammer **$K_A$** <101> vollständig durchströmt.

**8.** Verfahren nach einem der Ansprüche 1 bis 7, wobei der natriumkationenleitende Festelektrolyt **$F_K$** <111> eine Struktur der Formel $M^{I}_{1+2w+x-y+z}\ M^{II}_{w}\ M^{III}_{x}\ Zr^{IV}_{2-w-x-y}\ M^{V}_{y}\ (SiO_4)_z\ (PO_4)_{3-z}$ aufweist,

wobei $M^I$ ausgewählt aus $Na^+$, $Li^+$ ist,
M" ein zweiwertiges Metallkation ist,
$M^{III}$ ein dreiwertiges Metallkation ist,
$M^V$ ein fünfwertiges Metallkation ist,
die römischen Indizes I, II, III, IV, V die Oxidationszahlen angeben, in der die jeweiligen Metallkationen vorliegen,
und w, x, y, z reelle Zahlen sind, wobei gilt, dass $0 \leq x < 2$, $0 \leq y < 2$, $0 \leq w < 2$, $0 \leq z < 3$,
und wobei w, x, y, z so gewählt werden, dass $1 + 2w + x - y + z \geq 0$ und $2 - w - x - y \geq 0$ gilt.

**9.** Verfahren nach einem der Ansprüche 1 bis 8, wobei **$L_2$** <113> den Alkohol ROH und Natriumalkoholat NaOR umfasst.

**10.** Verfahren nach Anspruch 9, wobei das Massenverhältnis von NaOR zu Alkohol ROH in **$L_2$** <113> im Bereich 1 :

100 bis 1 : 5 liegt.

**11.** Verfahren nach Anspruch 9 oder 10, wobei die Konzentration von NaOR in $\mathbf{L_1}$ <115> um das 1.01 bis 2.2-fache höher ist als in $\mathbf{L_2}$ <113>.

**12.** Verfahren nach einem der Ansprüche 1 bis 11, wobei die Konzentration von NaCl in $\mathbf{L_3}$ <114> im Bereich von 3.5 bis 5 mol/l liegt.

**13.** Verfahren nach einem der Ansprüche 1 bis 12, wobei der Massenanteil des Salzes S in der Lösung $\mathbf{L_3}$ im Bereich 0.1 ppm bis 10 Gew.-% liegt.

**14.** Verfahren nach einem der Ansprüche 1 bis 13, welches bei einer Temperatur von 20 bis 70 °C und einem Druck von 0.5 bis 1.5 bar durchgeführt wird.

## Claims

**1.** Process for preparing a solution $\mathbf{L_1}$ <115> of a sodium alkoxide NaOR in the alcohol ROH in an electrolysis cell **E** <100>,

wherein **E** <100> comprises at least one anode chamber $\mathbf{K_A}$ <101>, at least one cathode chamber $\mathbf{K_K}$ <102> and at least one interposed middle chamber $\mathbf{K_M}$ <103>,
wherein $\mathbf{K_A}$ <101> comprises an anodic electrode $\mathbf{E_A}$ <104> and an outlet $\mathbf{A_{KA}}$ <106>,
wherein $\mathbf{K_K}$ <102> comprises a cathodic electrode $\mathbf{E_K}$ <105>, an inlet $\mathbf{Z_{KK}}$ <107> and an outlet $\mathbf{A_{KK}}$ <109>,
wherein $\mathbf{K_M}$ <103> comprises an inlet $\mathbf{Z_{KM}}$ <108> and a gas outlet **G** <120>, is separated from $\mathbf{K_A}$ <101> by a diffusion barrier **D** <110> and is separated from $\mathbf{K_K}$ <102> by a sodium cation-conducting solid-state electrolyte $\mathbf{F_K}$ <111>, wherein $\mathbf{K_A}$ <101> and $\mathbf{K_M}$ <103> are connected to one another by a connection $\mathbf{V_{AM}}$ <112> through which liquid can be routed from $\mathbf{K_M}$ <103> into $\mathbf{K_A}$ <101>,
wherein the process comprises the following steps (a), (b) and (c) that proceed simultaneously:

(a) a solution $\mathbf{L_2}$ <113> comprising the alcohol ROH is routed through $\mathbf{K_K}$ <102>,
(b) a neutral or alkaline, aqueous solution $\mathbf{L_3}$ <114> comprising NaCl and at least one salt **S** selected from hydrogencarbonate and carbonate is routed through $\mathbf{K_M}$ <103>, then via $\mathbf{V_{AM}}$ <112>, then through $\mathbf{K_A}$ <101>,
(c) voltage is applied between $\mathbf{E_A}$ <104> and $\mathbf{E_K}$ <105>, which affords the solution $\mathbf{L_1}$ <115> at the outlet $\mathbf{A_{KK}}$ <109>, wherein the concentration of NaOR in $\mathbf{L_1}$ <115> is higher than in $\mathbf{L_2}$ <113>,

and which affords an aqueous solution $\mathbf{L_4}$ <116> of NaCl at the outlet $\mathbf{A_{KA}}$ <106>, wherein the concentration of NaCl in $\mathbf{L_4}$ <116> is lower than in $\mathbf{L_3}$ <114>, and wherein the total concentration of all salts **S** in $\mathbf{L_4}$ <116> is lower than in $\mathbf{L_3}$ <114>,
and which forms $CO_2$ <121> in the middle chamber $\mathbf{K_M}$ <103>, which is removed from the middle chamber $\mathbf{K_M}$ <103> via the gas outlet **G** <120>,
wherein R is an alkyl radical having 1 to 4 carbon atoms.

**2.** Process according to Claim 1, wherein R is selected from the group consisting of methyl and ethyl.

**3.** Process according to Claim 1 or 2, wherein the diffusion barrier **D** <110> is selected from the group consisting of cation-conducting and anion-conducting membranes.

**4.** Process according to Claim 3, wherein the diffusion barrier **D** <110> is a sodium cation-conducting membrane.

**5.** Process according to any of Claims 1 to 4, wherein the flow direction of $\mathbf{L_3}$ <114> in the middle chamber $\mathbf{K_M}$ <103> is the opposite of the flow direction of $\mathbf{L_3}$ <114> in the anode chamber $\mathbf{K_A}$ <101>.

**6.** Process according to any of Claims 1 to 5, wherein the connection $\mathbf{V_{AM}}$ <112> is formed within and/or outside the electrolysis cell **E** <100>.

**7.** Process according to any of Claims 1 to 6, wherein the connection $\mathbf{V_{AM}}$ <112> between middle chamber $\mathbf{K_M}$ <103> and anode chamber $\mathbf{K_A}$ <101> is arranged in such a way that at least a portion of the aqueous solution $\mathbf{L_3}$ <114>

flows completely through the middle chamber $\mathbf{K_M}$ <103> and the anode chamber $\mathbf{K_A}$ <101>.

**8.** Process according to any of Claims 1 to 7, wherein the sodium cation-conducting solid-state electrolyte $\mathbf{F_K}$ <111> has a structure of the formula $M^{I}_{1+2w+x-y+z}\ M^{II}_{w}\ M^{III}_{x}\ Zr^{IV}_{2-w-x-y}\ M^{V}_{y}\ (SiO_4)_{z}\ (PO_4)_{3-z}$,

where $M^{I}$ is selected from $Na^{+}$ and $Li^{+}$,
$M^{II}$ is a divalent metal cation,
$M^{III}$ is a trivalent metal cation,
$M^{V}$ is a pentavalent metal cation,
the Roman indices I, II, III, IV, V indicate the oxidation numbers in which the respective metal cations exist, and
w, x, y, z are real numbers, where $0 \leq x < 2$, $0 \leq y < 2$, $0 \leq w < 2$, $0 \leq z < 3$,
and where w, x, y, z are chosen such that $1 + 2w + x - y + z \geq 0$ and $2 - w - x - y \geq 0$.

**9.** Process according to any of Claims 1 to 8, wherein $\mathbf{L_2}$ <113> comprises the alcohol ROH and sodium alkoxide NaOR.

**10.** Process according to Claim 9, wherein the mass ratio of NaOR to alcohol ROH in $\mathbf{L_2}$ <113> is in the range from 1:100 to 1:5.

**11.** Process according to Claim 9 or 10, wherein the concentration of NaOR in $\mathbf{L_1}$ <115> is 1.01 to 2.2 times higher than in $\mathbf{L_2}$ <113>.

**12.** Process according to any of Claims 1 to 11, wherein the concentration of NaCl in $\mathbf{L_3}$ <114> is in the range from 3.5 to 5 mol/l.

**13.** Process according to any of Claims 1 to 12, wherein the proportion by mass of the salt **S** in the solution $\mathbf{L_3}$ is in the range from 0.1 ppm to 10% by weight.

**14.** Process according to any of Claims 1 to 13, which is performed at a temperature of 20 to 70°C and a pressure of 0.5 to 1.5 bar.

## Revendications

**1.** Procédé pour la préparation d'une solution $L_1$ <115> d'un alcoolate de sodium NaOR dans un alcool ROH dans une cellule d'électrolyse E <100>,

E <100> comprenant au moins une chambre anodique $K_A$ <101>, au moins une chambre cathodique $K_K$ <102> et au moins une chambre centrale $K_M$ <103> située entre celles-ci,
$K_A$ <101> comprenant une électrode anodique $E_A$ <104> et une décharge $A_{KA}$ <106>,
$K_K$ <102> comprenant une électrode cathodique $E_K$ <105>, une alimentation $Z_{KK}$ <107> et une décharge $A_{KK}$ <109>,
$K_M$ <103> comprenant une alimentation $Z_{KM}$ <108> et une évacuation de gaz G <120>, étant séparée de $K_A$ <101> par une barrière à la diffusion D <110> et étant séparée de $K_K$ <102> par un électrolyte solide guidant les cations de sodium $F_K$ <111>,
$K_A$ <101> et $K_M$ <103> étant reliées l'une à l'autre par une liaison $V_{AM}$ <112>, à travers laquelle un liquide peut être guidé à partir de $K_M$ <103> dans $K_A$ <101>,
le procédé comprenant les étapes suivantes, se déroulant simultanément (a), (b) et (c) :

(a) une solution $L_2$ <113> comprenant l'alcool ROH est guidée à travers $K_K$ <102>,
(b) une solution aqueuse, neutre ou alcaline $L_3$ <114> comprenant NaCl et au moins un sel S, choisi parmi l'hydrogénocarbonate, le carbonate, est guidée à travers $K_M$ <103>, puis par l'intermédiaire de $V_{AM}$ <112>, puis à travers $K_A$ <101>,
(c) une tension est appliquée entre $E_A$ <104> et $E_K$ <105>, la solution $L_1$ <115> étant obtenue au niveau de la décharge $A_{KK}$ <109>, la concentration en NaOR dans $L_1$ <115> étant supérieure à celle dans $L_2$ <113>,

et suite à quoi une solution aqueuse $L_4$ <116> de NaCl est obtenue au niveau de la décharge $A_{KA}$ <106>, la concentration en NaCl dans $L_4$ <116> étant inférieure à celle dans $L_3$ <114>, et la concentration totale en tous les sels S dans $L_4$ <116> étant inférieure à celle dans $L_3$ <114>,

et suite à quoi du $CO_2$ <121> se forme dans la chambre centrale $K_M$ <103>, qui est évacué de la chambre centrale $K_M$ <103> par l'intermédiaire de l'évacuation de gaz G <120>,
R représentant un radical alkyle comprenant 1 à 4 atomes de carbone.

**2.** Procédé selon la revendication 1, R étant choisi dans le groupe constitué par méthyle et éthyle.

**3.** Procédé selon la revendication 1 ou 2, la barrière à la diffusion D <110> étant choisie dans le groupe constitué par les membranes guidant les cations, guidant les anions.

**4.** Procédé selon la revendication 3, la barrière à la diffusion D <110> étant une membrane guidant les cations de sodium.

**5.** Procédé selon l'une quelconque des revendications 1 à 4, le sens d'écoulement de $L_3$ <114> dans la chambre centrale $K_M$ <103> étant opposé au sens d'écoulement de $L_3$ <114> dans la chambre anodique $K_A$ <101>.

**6.** Procédé selon l'une quelconque des revendications 1 à 5, la liaison $V_{AM}$ <112> étant réalisée à l'intérieur et/ou à l'extérieur de la cellule d'électrolyse E <100>.

**7.** Procédé selon l'une quelconque des revendications 1 à 6, la liaison $V_{AM}$ <112> étant agencée entre la chambre centrale $K_M$ <103> et la chambre anodique $K_A$ <101> de manière telle qu'au moins une partie de la solution aqueuse $L_3$ <114> s'écoule complètement à travers la chambre centrale $K_M$ <103> et la chambre anodique $K_A$ <101>.

**8.** Procédé selon l'une quelconque des revendications 1 à 7, l'électrolyte solide guidant les cations de sodium $F_K$ <111> présentant une structure de formule

$$M^{I}_{1+2w+x-y+z}\, M^{II}_{w}\, Zr^{IV}_{2-w-x-y}\, M^{V}_{y}\, (SiO_4)_z\, (PO_4)_{3-z}$$

où

$M^I$ est choisi parmi $Na^+$, $Li^+$,
$M^{II}$ est un cation métallique divalent,
$M^{III}$ est un cation métallique trivalent,
$M^V$ est un cation métallique pentavalent,
les indices en chiffres romains I, II, III, IV, V indiquent les nombres d'oxydation dans lesquels se trouvent les différents cations métalliques et w, x, y, z sont des nombres réels, où $0 \leq x < 2$, $0 \leq y < 2$, $0 \leq w < 2$, $0 \leq z < 3$ et où w, x, y, z sont choisis de manière telle que $1 + 2w + x - y + z \geq 0$ et $2 - w - x - y \geq 0$.

**9.** Procédé selon l'une quelconque des revendications 1 à 8, $L_2$ <113> comprenant l'alcool ROH et l'alcoolate de sodium NaOR.

**10.** Procédé selon la revendication 9, le rapport massique de NaOR à alcool ROH dans $L_2$ <113> étant situé dans la plage de 1:100 à 1:5.

**11.** Procédé selon la revendication 9 ou 10, la concentration en NaOR dans $L_1$ <115> étant 1,01 à 2,2 fois supérieure à celle dans $L_2$ <113>.

**12.** Procédé selon l'une quelconque des revendications 1 à 11, la concentration en NaCl dans $L_3$ <114> se situant dans la plage de 3,5 à 5 moles/1.

**13.** Procédé selon l'une quelconque des revendications 1 à 12, la proportion massique du sel S dans la solution $L_3$ se situant dans la plage de 0,1 ppm à 10% en poids.

**14.** Procédé selon l'une quelconque des revendications 1 à 13, qui est réalisé à une température de 20°C à 70°C et à une pression de 0,5 bar à 1,5 bar.

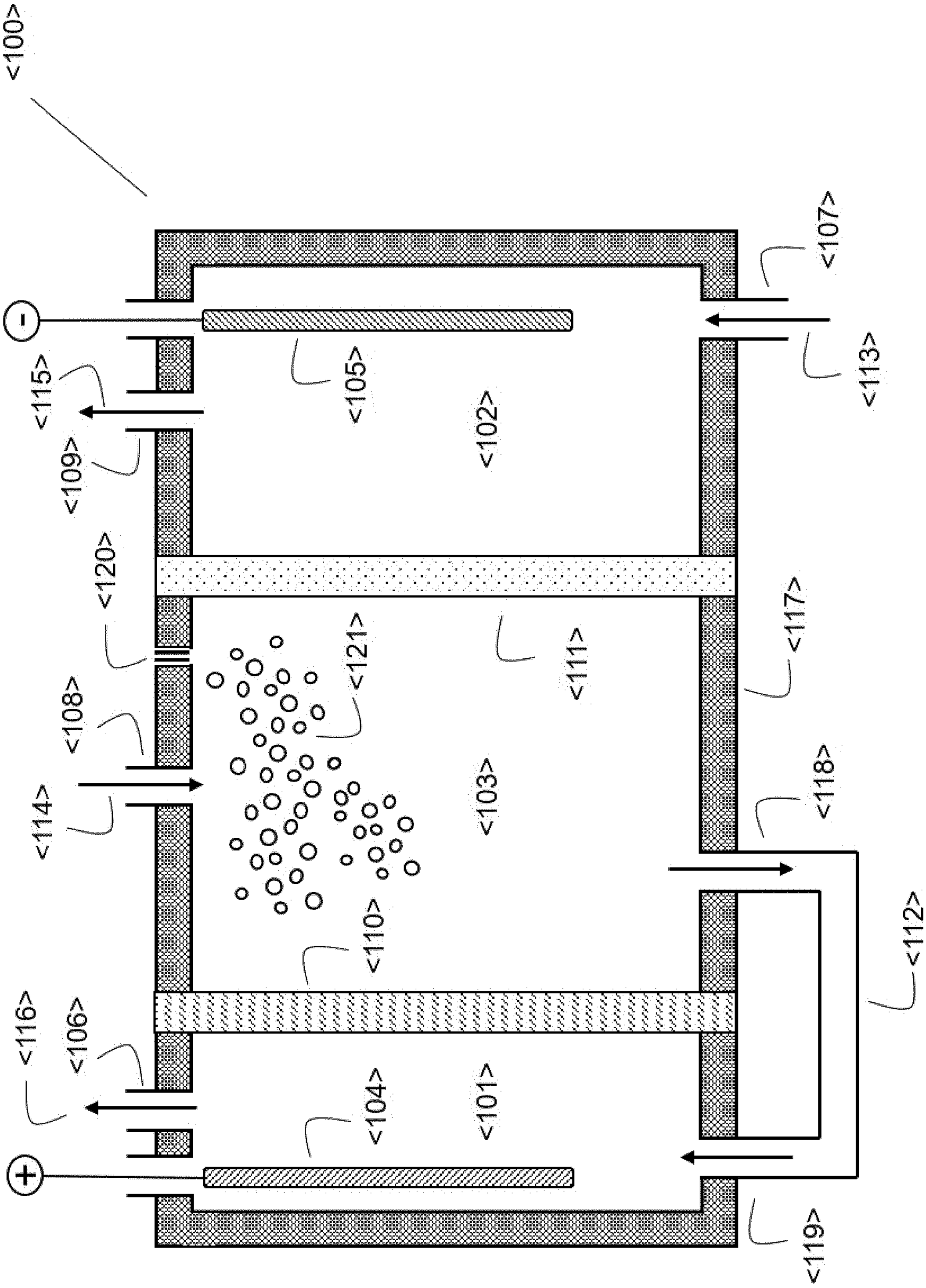
<100>
<101>
<102>
<103>
<104>
<105>
<106>
<107>
<108>
<109>
<110>
<111>
<112>
<113>
<114>
<115>
<116>
<117>
<118>
<119>
<120>
<121>
-
+

Abbildung 1

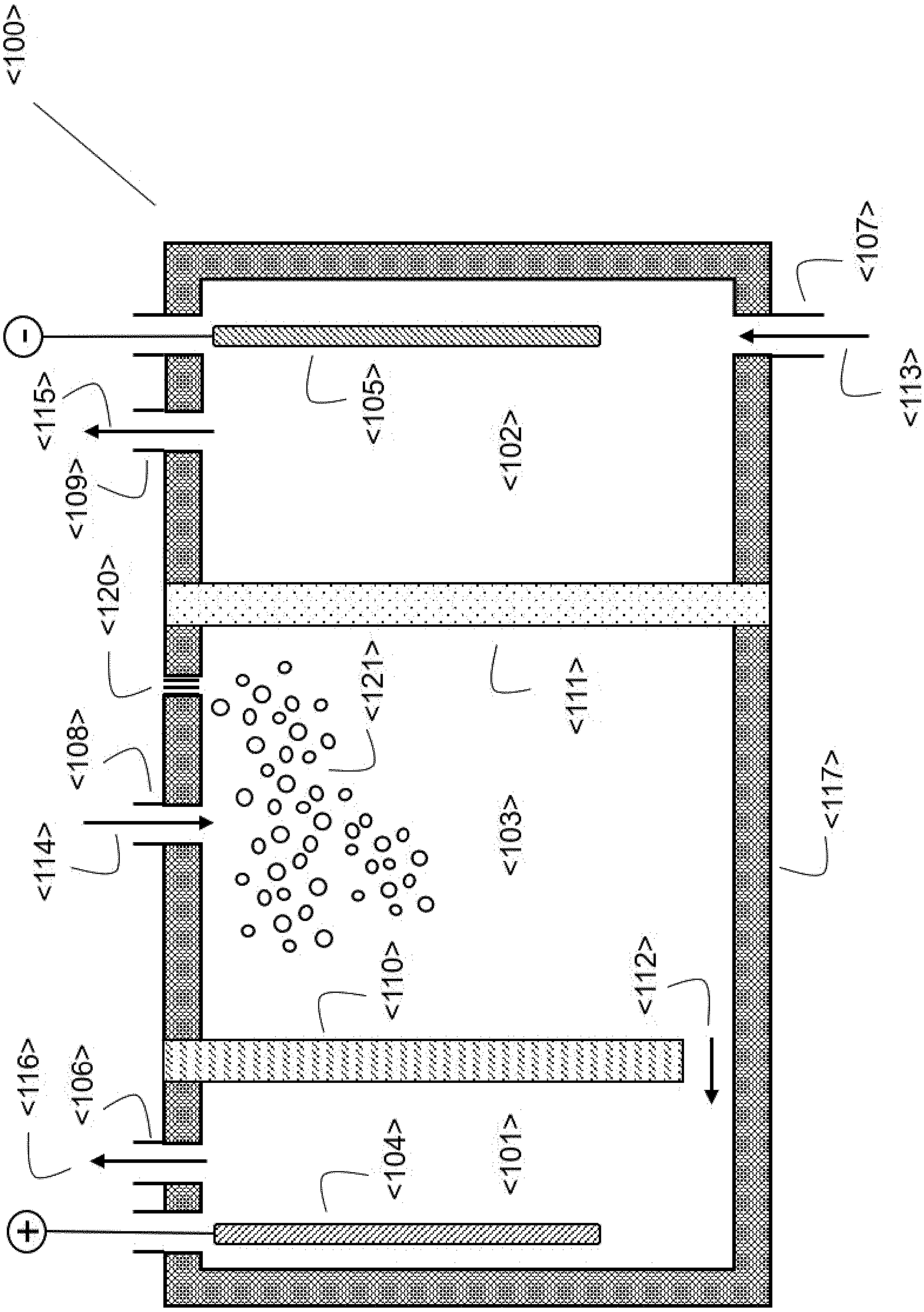
<100>
-
+
<105>
<102>
<107>
<113>
<115>
<109>
<120>
<121>
<111>
<108>
<114>
<103>
<117>
<112>
<110>
<116>
<106>
<104>
<101>

Abbildung 2

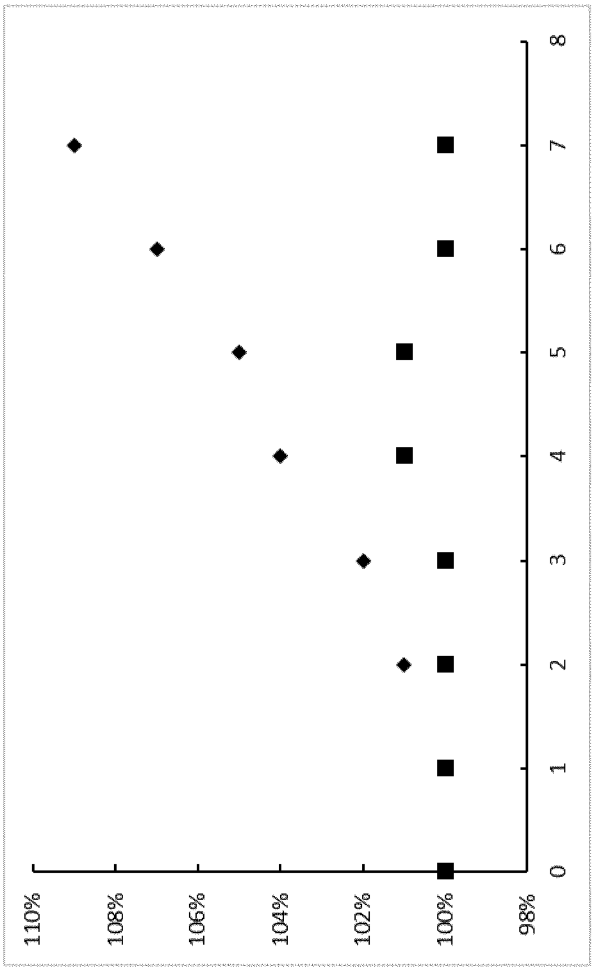


Abbildung 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10360758 A1
- US 20060226022 A1
- WO 2005059205 A1
- WO 2014008410 A1
- WO 2007082092 A2
- WO 2009059315 A1
- US 6221225 B1
- WO 2012048032 A2
- US 20100044242 A1
- US 5389211 A
- WO 2008076327 A1
- WO 2009073062 A2
- DD 258143 A3
- WO 2007048712 A2
- DE 102010062804 A1
- US 4831146 A
- US 20160204459 A1
- DE 102015013155 A1


### In der Beschreibung aufgeführte Nicht-Patentliteratur


- **F. KÜKE.** *Vom Wasser,* 2005, vol. 103, 18-22
- **M.A. HICKNER ; A.M. HERRING ; E.B. COUGHLIN.** *Journal of Polymer Science, Part B: Polymer Physics,* 2013, vol. 51, 1727-1735
- **C.G. ARGES ; V. RAMANI ; P.N. PINTAURO.** *Electrochemical Society Interface,* 2010, vol. 19, 31-35
- **VOLKMAR M. SCHMIDT.** Elektrochemische Verfahrenstechnik: Grundlagen, Reaktionstechnik, Prozessoptimierung. 08. Oktober 2003
- *CHEMICAL ABSTRACTS,* 31175-20-9
- **S.A. MAREEV ; D.YU. BUTYLSKII ; N.D. PISMENSKAYA ; C. LARCHET ; L. DAMMAK ; V.V. NIKONENKO.** *Journal of Membrane Science,* 2018, vol. 563, 768-776
- **N. ANANTHARAMULU ; K. KOTESWARA RAO ; G. RAMBABU ; B. VIJAYA KUMAR ; VELCHURI RADHA ; M. VITHAL.** *J Mater Sei,* 2011, vol. 46, 2821-2837